# EUROPEAN PATENT APPLICATION

(11) **EP 4 645 062 A1**
(43) Date of publication of application: **05.11.2025**
(21) Application number: 24173074.6
(22) Date of filing: 29.04.2024
(51) Int. Cl.: G06F 3/14

(54) **MASTER DISPLAY, A FIRST SLAVE DISPLAY, A SECOND SLAVE DISPLAY, LARGE SCREEN DISPLAY, A FIRST METHOD APPLIED TO A LARGE SCREEN DISPLAY, AND A SECOND METHOD APPLIED TO A LARGE SCREEN DISPLAY**

(71) Applicant: Optoma Europe Ltd., Hemel Hempstead HP1 2UJ (GB)
(72) Inventor: Taylor, Russell Lee, Hemel Hempstead, HP1 2UJ (GB)
(74) Representative: Ter Meer Steinmeister & Partner

(57) **Abstract**

A master display (10) of a large screen display (40) comprises an image data receiving component (11), a slave display existence identification component (12), at least one master display contact identification component(s) (13), a slave display contact identification component (14), a contact data receiving component (15) and a control system component (16). The control system component (16) is communicatively coupled to the image data receiving component (11), the slave display existence identification component (12), the at least one master display contact identification component(s) (13), the slave display existence identification component (14), and the contact data receiving component (15). The master display (10) of a large screen display (40) further comprises a display element (17) communicatively coupled to the control system component (16) for displaying an image according to the processed image data.

## Description

### TECHNICAL FIELD

The present disclosure relates to a master display of a large screen display. Further, it relates to a first slave display of a large screen display and to a second slave display of a large screen display. The present disclosure also relates to a large screen display, a first method applied to a large screen display, and a second method applied to a large screen display.

### TECHNICAL BACKGROUND

A large screen display is commonly used e.g. in showrooms, sale rooms or stands. A large screen display includes multiple displays combined to form a single large display. Each display displays a smaller piece of an overall image or each display displays the same image. In other words, the large screen display is formed of a matrix of the multiple displays arranged in lines and columns, such that the large screen display can display the overall image. In conventional large screen displays, one of the multiple displays is designated as a master display which controls the other displays, in particular slave displays, of the large screen display. A location of each display in the multi-display arrangement, i.e. matrix, needs to be known such that each display can be configured to appropriately display a correct image. The only way to configure the arrangement of the multiple displays, in particular the slave displays, in the multi-display arrangement is the uses of a control interface of the master display to provide a user with a means for programming the locations of each slave display. The manual programming of the locations of the master display and each one of the slave displays by the user is time-consuming and unpractical, because a replacement, a rearrangement of separating displays of the multi-display arrangement leads to a lot of manual working steps or any programming requires specific knowledge how to program or set the locations of the single slave displays. In the technical field of conventional large display screens, automatic methods/automatic configurations for configuring the arrangement of the multiple displays are known but these automatic methods are only usable for small arrangements of the multiple displays, i.e. at most 3x3 arrangements of the multiple displays.

The information disclosed in this background section is only for enhancement of understanding of the background of the described technology and therefore it may contain information that does not form prior art already known to a skilled person. Further, the information disclosed in the background section does not mean that one or more problems to be resolved by one or more embodiments of the disclosure was acknowledged by a skilled person.

### SUMMARY OF THE DISCLOSURE

An object of the present disclosure is to provide at least one of a large screen display, a master display, a first slave display, and a second slave display allowing an automatic configuration of the large screen display/automatic identification of the locations of the master display and each one of the slave displays leading to a reduction of the time-consumption for a configuration of a multi-display arrangement and leading to an increased practicality of the multi-display arrangement. Furthermore, it is object to provide an automatic identification of the locations of the master display and each one of the slave displays being usable for big arrangements of the multiple displays, i.e. more than 3x3 arrangements of the multiple displays.

This object is solved by the features of the independent claims. Preferred embodiments are given in the dependent claims.

In one aspect of the disclosure, a master display of a large screen display is provided. The master display of a large screen display comprises an image data receiving component configured for receiving image data; a slave display existence identification component configured for requesting and receiving slave display existence data from at least one slave display(s); at least one master display contact identification component(s) disposed on at least one edge(s) of the master display configured for providing and transmitting a contact data providing trigger to at least one adjacent slave display(s) of the master display and configured for receiving a contact data providing trigger by at least one slave display(s) (10) being adjacent to the master display 20; a slave display contact identification component configured for providing a contact data providing trigger instruction and for transmitting the contact data providing trigger instruction to a slave display for instructing the slave display to provide a contact data providing trigger to at least one adjacent slave display(s) of the slave display; a contact data receiving component for receiving contact data from the at least one adjacent slave display(s) of the master display and for receiving contact data from the at least one adjacent slave display(s) of the slave display; and a control system component communicatively coupled to the image data receiving component, the slave display existence identification component, the at least one master display contact identification component(s), the slave display existence identification component, and the contact data receiving component. The control system component is configured for setting an order of the at least one slave display(s) based on received slave display existence data, initiating, in particular by the master display contact identification component, a transmitting of the contact data providing trigger to at least one adjacent slave display(s) of the master display and initiating , in particular by slave display contact identification component, a receiving of the contact data of the at least one adjacent slave display(s) of the master display, initiating subsequently in the set order a transmitting of the contact data providing trigger instruction to a slave display and initiating a receiving of the contact data of the at least one adjacent slave display(s) of the slave display, identifying a position of the master display and the at least one slave display(s) in the large screen display based on the received contact data of the at least one adjacent slave display(s) of the master display and the received contact data of the at least one adjacent slave display(s) of the slave display, and processing the image data provided by the image data receiving component based on the position data. The master display further comprises a display element communicatively coupled to the control system component for displaying an image according to the processed image data.

The basic idea of the invention is to have on the hand a step of finding out how many slave displays are assembled in the large screen display. After knowing this, the number is used set an order for requesting each slave display to get the contact data of each slave display. As each master display and slave display has contact identification components to find out the neighbor relationship, the contact data of each adjacent slave display of a slave display and the contact data of at least one adjacent slave display(s) of the master display are used to define the position of each display inside the large screen display. Based on the position data, the image data is either distributed without being processed before or it is processed before being distributed to the respective slave display. In this way the slave display is able display the correct image. By using the method of the invention, the master display easily finds out how many slave displays are assembled in the large screen display. Thus, it is possible to apply the invention to any setup of multiple displays, even if there is an arbitrary assembly not being a regular matrix, e.g. having a setup with spaces or missing displays inside the area of the large screen display. These missing spaces are detected by the contact identification components via the method of the invention and thus, the master is able automatically, e.g. without any interference of the user, to determine the position of each slave display and to thereby avoid any extra time or knowledge when setting up a large screen display having multiple single displays.

The master display may be any display, in particular the only display, of the large screen display being configured for controlling at least one, in particular a plurality of, slave display(s) but is not limited thereto. The master display may be set by the user of the large display screen but is not limited thereto.

The master display may be directly or indirectly communicatively coupled to the at least one slave display(s) by wire manner (e.g. via Ethernet) and/or wireless manner (e.g. via Wi-Fi). In wire manner, for example, the master display and the at least one slave display(s) may be communicatively coupled one by one in a serial daisy chain, or each of the at least one slave display(s) is respectively connected to the master display.

The master display may be configured for providing control data associated with control signals to the at least one slave display(s). The control data may represent any data for controlling, e.g. turn on or turn off, the slave display but is not limited thereto. Additionally, the master display may be configured for providing image data, in particular image data or image data processed by the master display, to the at least one slave display(s). Further, additionally, the master display may be configured for providing power to at least one, some or all of the slave displays. The master display may comprise an image data receiving component, a slave display existence identification component, at least one master display contact identification component(s), a slave display contact identification component, a contact data receiving component, a control system component, and a display element, an image data providing component, a gravitational sensor, and an orientation data receiving component but is not limited thereto. Additionally, the master display may comprise at least one gravitational sensor but is not limited thereto. The master display comprises a front side, a back side and four edges/sidewalls (top, bottom, left, right) but are not limited thereto. The master display may comprise a data memory for storing determined/provided position data of the master display and/or the at least one slave display. The master display may further comprise a master display control interface. A user can operate the master display, e.g. can turn on, turn off, through the master display control interface.

The image data receiving component may represent any component being configured for receiving image data from an external host. The image data receiving component may be arranged in the master display but is not limited thereto. The image data receiving component may be integrated into the control system component or may be a separate component. In this context, the image data may represent any image data being provided to the master display and/or being received by the master display from at least one device being external to the master display and external to the large screen display. In other words, the image data may be any data being not processed or affected by the master display and/or by any other display of the large screen display. The at least one device being external to the master display and external to the large screen display may be a video stream source but is not limited thereto. The at least one device being external to the master display and external to the large screen display and the image data receiving component of the master display may be directly or indirectly by wire or wireless communicatively coupled to each other. The image data may be any data, e.g. still image data or moving or video image data.

The master display contact identification component may represent any component configured for providing and transmitting a contact data providing trigger to at least one adjacent slave display(s) of the master display. Additionally, the master display contact identification component may represent any component being configured for receiving a contact data providing trigger by at least one slave display being adjacent to the master display. The master display may comprise a contact data providing trigger generating sub-component, a contact data providing trigger transmitting sub-component, and/or a contact data trigger receiving. The contact data providing trigger generating sub-component may represent any component configured for providing the contact data providing trigger. The term "providing" is to be interpreted as received from an external device, retrieved from an external device, generated directly by the contact data providing trigger generating sub-component, or created directly by the contact data providing trigger generating sub-component but is not limited thereto. The contact data providing trigger transmitting sub-component may represent any component being configured for transmitting the provided contact data providing trigger to at least one adjacent slave display(s) of the master display. The contact data providing trigger transmitting sub-component may be directly or indirectly communicatively coupled to the contact data providing trigger receiving component of the at least one slave display being adjacent to the master display. The contact data providing trigger receiving component may represent any component of the master display being disposed on at least one edge(s) of the master display and being configured for receiving the contact data providing trigger transmitted by at least one slave display being adjacent to the master display. The contact data providing trigger receiving component may be directly or indirectly communicatively coupled to the slave display, in particular the contact data providing trigger transmitting sub-component of the slave display. The contact data providing trigger may represent a pulse but is not limited thereto. For instance, the contact data providing trigger may be a mechanical, optical, electronic magnetic, sonic or radio frequency pulse. But is not limited thereto. For instance, the master display contact identification component comprises an emitter and a receiver. To ensure that the master display contact identification component work properly and satisfactorily, the master display contact identification components are aligned to each other such that the transmitted light from one display can be received from another display and vice versa. In another example, the master display contact identification component may be a mechanical contact switch which comprises a protruding portion and a touch portion. The mechanical contact switch connects with an actuator. For example, the actuator may drive the protruding portion of one of displays in pulse. And then the protruding portion of one of display may touch the touch portion of the mechanical contact switch of the adjacent display. Further, the master display contact identification component may be a pressure sensor, a tactile sensor, an infrared sensor, and an RFID communication element but is not limited thereto. The contact data may represent any data indicating a contact within a range of distance (D) between the at least two neighboring displays. In this context, the two neighboring displays may have a range of distance (D) is 0~5(cm) but is not limited thereto. The master display contact identification component may be arranged on at least one edge/sidewall of the master display. Alternatively, the at least one master display contact identification component(s) of the master display may be arranged fully or at least partially embedded respectively hidden in at least one edge/sidewall of the master display. Alternatively, the at least one master display contact identification component(s) of the master display may be arranged spaced apart from at least one edge/sidewall of the master display. Alternatively, at least one master display contact identification component(s) of the master display may be arranged in the centrum of the master display. The at least one master display contact identification component may be identical or different to each other. Based on the used sensing element, the arrangement of the master display contact identification components of neighbored displays, e.g. master display and/or slave display, must be adapted to each other or not. For instance, the master display contact identification component may be arranged at one edge, in the middle or shifted from the middle of the display but is not limited thereto.

The slave display contact identification component may represent any component being configured for providing a contact data providing trigger instruction. Additionally, the slave display contact identification component may be configured for transmitting/sending the contact data providing trigger instruction to a slave display, in particular a slave display selected by the order, for instructing the slave display to provide a contact data providing trigger to at least one adjacent slave display(s) of the slave display. The slave display contact identification component may be communicatively coupled by wire or wireless to the control system component, in particular second initiating sub-component, but is not limited thereto. The slave display contact identification component may comprise a contact data providing trigger instruction generating sub-component and a contact data providing trigger instruction transmitting sub-component. The contact data providing trigger instruction generating sub-component may represent any component being configured for generating, creating, respectively providing a contact data providing trigger instruction. The contact data providing trigger instruction transmitting sub-component may represent any component being configured for transmitting the contact data providing trigger instruction to a slave display. The contact data providing trigger instruction transmitting sub-component may be directly or indirectly communicatively coupled to the slave display, in particular the contact data providing trigger receiving component but is not limited thereto. Alternatively, the slave display contact identification component may comprise a contact data providing trigger instruction generating sub-component, a contact data providing trigger generating sub-component, and a contact data providing trigger instruction transmitting sub-component. The contact data providing trigger generating sub-component may represent any component being configured for generating a contact data providing trigger. The contact data providing trigger of the contact data providing trigger generating sub-component may be identical or different to the contact data providing trigger provided by the contact data providing trigger generating sub-component of the master display contact identification component but is not limited thereto. The contact data providing trigger instruction transmitting sub-component may be also configured for transmitting, beside the contact data providing trigger instruction, the contact data providing trigger to a slave display, i.e. selected slave display.

The contact data providing trigger instruction may represent any message instructing the slave display which has received the contact data providing trigger instruction to provide a contact data providing trigger to at least one adjacent slave display(s) of the slave display. The contact data providing trigger instruction may comprise at least one integer and/or string but is not limited thereto. The contact data providing trigger instruction may be identical for all slave displays or specific for each one of the slave displays.

The contact data may represent any data indicating if and at which edge/sidewall of the display, i.e. master display or slave display, a contact data receiving trigger is received and therefore indicating which slave displays are in contact to at least one other display(s). The contact data may comprise a string number or an integer number but is not limited thereto. For instance, the contact data may be [side of contact; slave display identifier] but is not limited thereto. The side of contact may be "T" for top, "B" for bottom, "L" for left, and "R" for right but is not limited thereto. The slave display identifier may be the unique ID of the slave display but is not limited thereto. Therefore, if e.g. the slave display "A" receives the contact data trigger of the master display at the top of the slave display, the contact data provided by the slave display "A" to the master display may be [T; A]. The control system components of the master display and/or of at least one slave display(s) may compute and generate the number of themselves. The numbers may be respectively stored in the data memories of the master display and/or of the at least one slave display(s).

The slave display existence identification component may represent any component being configured for requesting and for receiving existence data from at least one slave display(s). The slave display existence identification component may comprise a slave display existence request providing sub-component and a slave display existence data receiving sub-component but is not limited thereto.

The slave display existence request providing sub-component may represent any component being configured for identifying the existence of at least one, in particular a plurality of, slave displays being connected or being adjacent to the master display. For complying this purpose, the slave display existence identification sub-component may represent any component being configured for providing, respectively generating, and for transmitting a slave display existence request to at least one slave display. The providing of the slave display existence request may include a generation of a slave display existence request or a retrieving from an existing slave display existence request stored in a memory. The slave display existence identification sub-component may comprise a memory for storing one or a plurality of different slave display existence requests.

The slave display existence request may be any request, query, question, or instruction triggering at least one slave display to transmit slave display existence data to the master display. The slave display existence request may comprise a string and/or an integer but is not limited thereto. The slave display existence request is provided by the slave display existence identification component. For instance, the slave display existing request may be a specific message transmitted to one specific slave display or a broadcast request/message transmitted to all slave displays of the large screen display.

The slave display existence data receiving sub-component may represent any component being configured for receiving slave display existence data from at least one slave display(s). The slave display existence data receiving sub-component may be directly or indirectly communicatively coupled to the slave display, in particular the slave display existence data providing component of the slave display. The slave display existence data receiving sub-component may be combined or integrated with the slave display existence identification component or may be integrated into the control system component.

The slave display existence data may represent any data indicating the existence of a slave display. For instance, the slave display existence data may be unique ID of each one of the at least one slave display(s) but is not limited thereto. The slave display existence data may comprise/include an integer and/or a string but is not limited thereto. In particular, the slave display existence data may comprise/include a plurality of integers and/or strings. The slave display existence data may be provided/generated by a slave display existence request receiving component of the slave display or by the control system component of the slave display.

The contact data receiving component may represent any component being configured for receiving at least one contact data from at least one slave display(s) of the large screen display. The contact data receiving component may be arranged within the master display. The contact data receiving component may be indirectly or directly communicatively coupled by wire or wireless to the slave display, in particular to a contact data providing component, of the slave display.

The control system component of the master display may represent any component configured for processing the image data provided by the image data receiving component of the master display. Additionally, the control system component may represent any component for providing position data and therefore providing an automatic configuration of the large screen display by using the position data. The control system component may comprise an order setting sub-component, a first initiating sub-component, a second initiating sub-component, a position identification sub-component, and a processing sub-component but is not limited thereto.

The order setting sub-component may represent any component being configured for setting an order of the received slave display existence data. The order setting sub-component may comprise a memory for storing the set order or for retrieving a set order. The order of the received slave display existence data may be set to an order in which the slave display existence data were received or may be set to ascending or descending numbers/characters of the slave display existence data but is not limited thereto. The order of the received slave display existence data may be provided as a tabular or a list but is not limited thereto.

The first initiating sub-component may be any component being configured for initiating respectively triggering by the master display contact identification component a transmitting of the contact data providing trigger to at least one adjacent slave display(s) of the master display in particular to the contact data providing trigger receiving component. The first initiating sub-component may be directly or indirectly communicatively coupled to the at least one slave display(s) but is not limited thereto. Additionally, the first initiating sub-component may be configured for initiating a receiving of the contact data of the at least one adjacent slave display(s) of the master display, in particular by the contact data receiving component of the master display.

The second initiating sub-component may be any component being configured for configured for initiating respectively triggering by the slave display contact identification component a transmitting of the contact data providing trigger instruction to a slave display(s), in particular to a contact data providing trigger instruction receiving component. The second initiating sub-component may be directly or indirectly communicatively coupled to the at least one slave display(s) but is not limited thereto. Additionally, the second initiating sub-component may be configured for initiating a receiving of the contact data of the at least one adjacent slave display(s) of the slave display by the master display, in particular by the contact data receiving component of the master display.

The position identification component may represent any component be configured for identifying a position of the master display and the at least one slave display in the large screen display based on the contact data of the at least one adjacent slave display(s) of the master display and the received contact data of the at least one adjacent slave display(s) of the slave display. The position identification component may be directly or indirectly communicatively coupled to the at least one master display contact identification component(s) of the master display, the order setting sub-component, the first initiating sub-component, the second initiating sub-component, the contact data receiving component, and the processing sub-component but is not limited thereto. The position identification component may receive the order of the received slave display existence data from the order setting component, trigger the first initiating component to initiate by the master display contact identification component a transmitting of the contact data providing trigger to at least one adjacent slave display(s) of the master display and a receiving of the contact data of the at least one adjacent slave display(s) of the master display, in particular by the contact data receiving component of the master display, and trigger the second initiating component to initiate by the slave display contact identification component subsequently in the set order a transmitting of the contact data providing trigger instruction to a slave display and a receiving of the contact data of the at least one adjacent slave display(s) of the slave display, in particular by the contact data receiving component of the master display. The position identification component may define the manner/way how the position data are determined/provided.

Exemplary and preferably, the position of the master display and the at least one slave display(s) within the large screen display may be provided by the following steps: In a first sub-step, the order of the received slave display existence data from the order setting component is received. In a second sub-step, the master display is virtually positioned in a corner of a virtual grid. In a third sub-step, the position identification component triggers the first initiating sub-component to transmit the contact data providing trigger by the at least one master display contact identification component(s) to at least one adjacent slave display(s) of the master display and to receive the contact data of the at least one adjacent slave display(s) of the master display by the master display, in particular contact data receiving component. In a fourth sub-step, the master display is virtually shifted to another position of the virtual grid, when the contact data of the at least one adjacent slave display(s) of the master display indicates that the master display needs to be in a different position of the virtual grid.

In a fifth sub-step, the position identification component checks if the slave display being the first slave display in the order has provided contact data to the master display. If the first slave display in the order has provided contact data to the master display, a sixth sub-step and a seventh sub-step follows. In a sixth sub-step, the position identification component triggers the second initiating component to initiate/trigger by the slave display contact identification component, subsequently in the set order, a transmitting of the contact data providing trigger instruction to the first slave display in the order for instructing the first slave display to provide a contact data providing trigger to at least one adjacent slave display(s) of the first slave display. Further, in the sixth sub-step, the position identification component triggers the second initiating component to initiate/trigger a receiving of the contact data of the at least one adjacent slave display(s) of the first slave display by the master display, in particular by the contact data receiving component. In a seventh sub-step, the master display and the first slave display in the order are virtually shifted to another position of the virtual grid, when the contact data of the at least one adjacent slave display(s) of the first slave display in the order indicates that the master display and the first slave display in the order needs to be in a different position of the virtual grid.

In an eight sub-step, the position identification component checks if the slave display being the next slave display in the order has provided contact data to the master display. If the next slave display in the order has provided contact data to the master display, a nineth sub-step and a tenth sub-step follows. In a nineth sub-step, the position identification component triggers the second initiating component to initiate/trigger by the slave display contact identification component, subsequently in the set order, a transmitting of the contact data providing trigger instruction to the next slave display in the order for instructing the next slave display in the order to provide a contact data providing trigger to at least one adjacent slave display(s) of the next slave display. Further, in the nineth sub-step, the position identification component triggers the second initiating component to initiate/trigger a receiving of the contact data of the at least one adjacent slave display(s) of the next slave display in the order to the master display. In a tenth sub-step, the master display, the first slave display in the order, and the next slave display in the order are virtually shifted to another position of the virtual grid, when the contact data of the at least one adjacent slave display(s) of the next slave display in the order indicates that the master display, the first slave display in the order, and the next slave display in the order needs to be in a different position of the virtual grid.

This proceeding may be repeated until the position identification component has received and considered each one of the slave displays being included in the order and/or until the first/next slave display in the order is not in/included the contact data of the master display/previous slave display.

If the first/next slave display in the order has not presented contact data to the master display, the following sub-steps follows. In an eleventh sub-step, the first/next slave display is virtually shifted to a corner of another virtual grid. In a twelfth sub-step, the position identification component triggers the second initiating component to initiate/trigger by the slave display contact identification component, subsequently in the set order, a transmitting of the contact data providing trigger instruction to the first/next slave display in the order for instructing the first/next slave display in the order to provide a contact data providing trigger to at least one adjacent slave display(s) of the first/next slave display. Further, in the twelfth sub-step, the position identification component triggers the second initiating component to initiate/trigger a receiving of the contact data of the at least one adjacent slave display(s) of the first/next slave display in the order to the master display. In a thirteenth sub-step, the first/next slave display is virtually shifted to another position of the other virtual grid, when the contact data of the at least one adjacent slave display(s) of the first/next slave display indicates that the master display needs to be in a different position of the other virtual grid.

In a fourteenth sub-step, the position identification component checks if the next slave display being the next slave display in the order has presented contact data to the master display and checks the grid and the at least one other grid if there are any similarities, in particular similarities in the contact data of displays in the grid and in the at least one other grid. If the next slave display in the order has provided contact data to the master display and no similarity is identified, a fifteenth sub-step and a sixteenth sub-step follow. If the next slave display in the order has not provided contact data to the master display and no similarity is identified, the eleventh sub-step, the twelfth sub-step, the thirteenth sub-step, and the fourteenth sub-step are repeated. Alternatively, if the next slave display in the order has provided contact data to the master display and/or at least one similarity in the contact data of at least one display in the grid and the at least one other grid is identified, the position data and contact data of the displays of the other grid are included to the position data and contact data of the displays of the "first" grid, i.e. grid including the contact data and position data of the master display. Thereby, the identified position data of both grids can be merged together in one grid. In this context, the term "merging" may represent that cased on the included position data and contact data of the at least one other grid, the sixteenth sub-step is executed, such that displays in grid are virtually shifted to another position, when the position data and the contact data of the displays of the grid have to be in a different position based on the position data and the contact data of the other virtual grid. After the merging, the fifth sub step is executed.

In a fifteenth sub-step, the position identification component triggers the second initiating component to initiate/trigger by the slave display contact identification component, subsequently in the set order, a transmitting of the contact data providing trigger instruction to the next slave display in the order for instructing the next slave display in the order to provide a contact data providing trigger to at least one adjacent slave display(s) of the next slave display. Further, in the fifteenth sub-step, the position identification component triggers the second initiating component to initiate/trigger a receiving of the contact data of the at least one adjacent slave display(s) of the next slave display in the order to the master display.

In a sixteenth sub-step, the first/next slave display and the next slave display in the order are virtually shifted to another position of the virtual grid, when the contact data of the at least one adjacent slave display(s) of the first/next slave display and the next slave display in the order indicates that the first/next display and the next slave display in the order needs to be in a different position of the virtual grid.

This proceeding may be repeated until the position identification component has received and considered each one of the slave displays being included in the order, until the next slave display in the order is not in/included the contact data of the previous first/next slave display and/or until the contact data of the next slave display comprises the slave display existence data of an already considered slave display and/or the master display. In other words, in the last case, the other grid is merged to the first grid in order to merge both grids. The number of other virtual grids may be unlimited.

The position data may represent any data indicating the location or position of each one of the master display and the at least one slave display(s). The position data may be provided/determined by the control system component, in particular by the position data providing component. The position data may include at least one string and/or at least one integer. The position data may not be interpreted as to be geographical position data. The position data may be interpreted as to be position data with respect to the other displays within a grid. For instance, the position data may be: top/slave display A; bottom/slave display K; left/slave display E; right/slave display X but is not limited thereto.

The processing sub-component may represent any component being configured for processing the received image data provided by the image data receiving component based on the position data. The processing sub-component may be or may comprise processor but is not limited thereto.

The processing of the image date may be based on the position data. Alternatively, when the master display comprises a gravitational sensor, the processing of the received image data may be based on the position data and the orientation data but is not limited thereto. Further, the control system component of the master display may be configured for controlling the master display by providing and respectively generating and executing control signals and/or for controlling the at least one slave display(s) by providing and respectively generating and transmitting control signals to the at least one slave display(s) but is not limited thereto.

The control system component may be directly or indirectly communicatively coupled by wire or wireless to the image data receiving component, the slave display existence identification component, the at least one master display contact identification component(s), the slave display contact identification component, the contact data receiving component, and the display element but is not limited thereto.

In this context, the term "processing" may represent that the control system component of the master display may be configured for changing or customizing the image data format of the image data to be useable by the master display and/or the slave display. Additionally or alternatively, the term "processing" may represent that the control system component is configured for splitting or dividing the image data into one or more split image data sets, wherein the number of split image data sets may correspond to the number, in particular maximum number, of used displays, i.e. master displays and slave displays, in the large screen display.

The display element may represent any element, device or component being configured for displaying an image according to the image data and/or the processed image data processed by the master display, in particular the control system component of the master display, and/or the slave display, in particular the control system component of the slave display. The display element may be arranged at the front of the master display and/or slave display and may extend over the entire surface of the front of the master display and/or slave display but is not limited thereto.

The image data providing component may represent any component being configured for providing and respectively transmitting the image data received by the image date receiving component of the master display or the processed image data processed by the control system component of the master display to the at least one slave display(s). The image data providing component and the at least one slave display, in particular the image data receiving component of the slave display, may be directly or indirectly communicatively coupled by wire or wireless to each other. The image data providing component may be further configured for providing the image data, i.e. the received or the processed image data, with position data determined/provided by the control system component of the master display to the at least one slave display. Preferably, the image data providing component may be further configured for providing the image data, i.e. the received image data, with position data determined/provided by the control system component of the master display to the at least one slave display.

The gravitational sensor may represent any sensor configured for sensing or measuring orientation data. The orientation data may represent any data indicating the orientation, i.e. direction or inclination, of the master display and/or the slave display. For example, at least one of the master display and the slave displays are disposed in portrait mode. The portrait mode means that the high is longer than width of the master display or the slave display. The gravitational sensor may be arranged both in master display and/or the slave display. Alternatively, the gravitational sensor may be arranged on a surface, i.e. an edge/sidewall or backwall of the master display and/or the slave display. The gravitational sensor may be directly or indirectly communicatively coupled to control system component of the master display and/or to the control system component of the slave display by wire or wireless. Additionally, the gravitational sensor may be any sensor being configured for sensing or measuring the gravity acceleration affecting on the master display and/or the slave display in order to determine the angular orientation in which the master display and/or the slave display is arranged.

The orientation data receiving component may represent any component for receiving orientation data from at least one of the slave displays. The orientation data receiving component may be directly or indirectly by wire or wireless communicatively coupled to the at least one gravitational sensor of the at least one slave display but is not limited thereto. The orientation data receiving component may be directly or indirectly by wire or wireless communicatively coupled to the control system component of the master display.

The slave display may represent any display of the large screen display being configured to be controlled by a master display but is not limited thereto. The slave display may be directly or indirectly communicatively coupled by wire or wireless to the master display. The slave display may be configured for receiving control data associated with control signals from the master display. Additionally, the slave display may be configured for receiving image data or image data processed by the master display, from the master display. Further, additionally, the slave display may be configured for receiving power from the master display. The slave display and the master display may be identical but is not limited thereto. The slave display may comprise an image data receiving component, a slave display existence request receiving component, a slave display existence data providing component, at least one contact data providing trigger receiving component(s), at least one contact identification component(s), a contact data providing component, at least one contact data providing trigger instruction receiving component, at least one contact data providing trigger transmitting component, and a display element. Alternatively, the slave display may comprise an image data receiving component, a slave display existence request receiving component, a slave display existence data providing component, at least one contact data providing trigger receiving component(s), at least one contact identification component(s), a contact data providing component, at least one contact data providing trigger instruction receiving component, at least one contact data providing trigger transmitting component, a control system component, and a display element. Additionally, the slave display may comprise at least one gravitational sensor but is not limited thereto. The slave display comprises a front side, a back side and at least four side walls but are not limited thereto. The slave display may comprise a data memory for storing the determined position data provided by respectively received from the master display and the unique ID of the slave display. The slave display may comprise an image data providing component. The image data providing component may be any component being configured for providing the image data and the determined position data both provided by respectively received from the master display to another slave display. The slave display may be identical to the master display.

The image data receiving component may represent any component being configured for receiving image data from the master display or for receiving processed image data provided by the master display, in particular by the image data providing component of the master display or for receiving image data from the slave display. Additional, the image data receiving component may be configured for receiving the image data received by the image data receiving component of the master display and the position data provided by the master display, in particular the control system component of the master display. The image data receiving component may be directly or indirectly communicatively coupled by wire or wireless to the master display or the slave display, in particular by the image data providing component of the master display or of the slave display, but is not limited thereto.

The control system component of the slave display may represent any component being configured for processing the image data, in particular the non-processed image data, provided by the master display, in particular by the image data providing component of the master display. The processing of the image date may be based on the position data of the slave display provided by the master display. Alternatively, when the slave display comprises a gravitational sensor, the processing of the image data may be based on the position data of the at least one slave display and the orientation data but is not limited thereto. Further, the slave display may be configured for controlling another slave display by providing control signals and/or by receiving and executing control data associated with control signals provided by the master display. For instance, the control system component of the slave display comprises a processing sub-component but is not limited thereto. The control system component may be directly or indirectly communicatively coupled by wire or wireless to the image data receiving component, slave display existence request receiving component, the slave display existence data providing component, the at least one contact data providing trigger receiving component(s), the at least one contact identification component(s), the contact data providing component, the at least one contact data providing trigger instruction receiving component, the at least one contact data providing trigger transmitting component, the display element, and/or the at least one gravitational sensor but is not limited thereto. In this context, the term "processing" may represent that the control system component of the slave display may be configured for changing or customizing the image data format of the received image data to be useable by the slave display. Additionally or alternatively, the term "processing" may represent that the control system component of the slave display is configured for splitting and dividing the received image data into one or more split image data sets based on the position data provided by the master display.

The slave display existence request receiving component may represent any component being configured for receiving a slave display existence request. The slave display existence request receiving component may be directly or indirectly by wire or wireless communicatively coupled to the slave display existence identification component of the master display. The slave display existence request receiving component may be configured for providing/generating slave display existence data or for retrieving existing slave display existence data from a memory of the slave display but is not limited thereto. Alternatively, the slave display existence request receiving component may be configured for transmitting the slave display existence request to the control system component which provides/generates/retrieves the slave display existence data and provides the slave display existence data to the slave display existence data providing component.

The slave display existence data providing component may represent any component for providing/transmitting the slave display existence data to the master display, in particular the slave display existence data receiving component. The slave display existence data providing component may be directly or indirectly by wire or wireless communicatively coupled to the slave display existence data receiving component but is not limited thereto.

The contact data providing trigger receiving component of the slave display may represent any component being disposed on at least one edge(s) of the slave display and being configured for receiving the contact data providing trigger transmitted by the master display, in particular by the contact data providing trigger transmitting sub-component. The contact data providing trigger receiving component may be directly or indirectly communicatively coupled to the master display, in particular the contact data providing trigger transmitting sub-component of the master display. The contact data providing trigger receiving component may be included in the at least one contact identification component(s) or may be separate to the at least one contact identification component(s). The contact data providing trigger receiving component of the slave display may be identical or different to the master display contact identifying component but is not limited thereto. Therefore, the contact data providing trigger receiving component of the slave display may comprise the same features like the master display contact identifying component.

The contact identification component may represent any being disposed on at least one edge(s) of the slave display being configured for providing contact data of the slave display. The contact identification component may be directly or indirectly coupled to the contact data providing trigger receiving component. The contact data providing trigger receiving component and the contact identification component may be arranged in a same component or as separate components.

The contact data providing trigger instruction receiving component may represent any component being configured for receiving a contact data providing trigger instruction from the master display, in particular contact data providing trigger instruction transmitting sub-component. The contact data providing trigger instruction receiving component may be directly or indirectly communicatively coupled to the master display, in particular the contact data providing trigger instruction transmitting sub-component.

The contact data providing trigger transmitting component may represent any component being configured for transmitting a contact data trigger to at least one adjacent display of the slave display. The contact data providing trigger transmitting component may be directly or indirectly communicatively coupled to the at least one adjacent display of the slave display, in particular the contact data providing trigger receiving component.

The contact data providing trigger generating component may represent any component being configured for generating a contact data trigger when the contact data providing trigger instruction is received by the contact data providing trigger instruction receiving component. The contact data providing trigger generating component may comprise a processing component in order to provide/generate the contact data trigger from the contact data providing trigger instruction or when the contact data providing trigger instruction is received.

The contact data providing component may be any component being configured for providing the contact data of the slave display at least to the master display, in particular the contact data receiving component of the master display. The contact data providing component may be directly or indirectly communicatively coupled by wire or wireless to the master display, in particular the contact data receiving component of the master display.

By providing position data of the master display and the at least one slave display in the above described manner, an automatic configuration of large display screens above the 3x3 size can be provided such that a reduction of the time-consumption of a configuration of a multi-display arrangement and an increased practicality of the multi-display arrangement can be provided.

In an embodiment of the master display, the master display further comprises an image data providing component communicatively coupled to the control system component, wherein the image data providing component is configured for providing the processed image data to the at least one slave display(s) or for providing the received image data with the provided position data to the at least one slave display(s).

In an embodiment of the master display, the slave display existence identification component comprises a slave display existence request providing sub-component configured for providing and for transmitting a slave display existence request to at least one slave display; and a slave display existence data receiving sub-component configured for receiving slave display existence data from at least one slave display.

In an embodiment of the master display, the at least one master display contact identification component comprises a contact data providing trigger generating sub-component configured for generating a contact data providing trigger; and a contact data providing trigger transmitting sub-component configured for transmitting the provided contact data providing trigger to at least one adjacent slave display(s) of the master display.

In an embodiment of the master display, the slave display contact identification component comprises a contact data providing trigger instruction generating sub-component configured for generating a contact data providing trigger instruction, and a contact data providing trigger instruction transmitting sub-component configured for transmitting the contact data providing trigger instruction to a slave display, or a contact data providing trigger instruction generating sub-component configured for generating a contact data providing trigger instruction, a contact data providing trigger generating sub-component configured for generating a contact data providing trigger; and a contact data providing trigger instruction transmitting sub-component configured for transmitting the contact data providing trigger instruction and the contact data providing trigger to a slave display.

In an embodiment of the master display, the control system component comprises an order setting sub-component configured for setting an order of the received slave display existence data; a first initiating sub-component configured for initiating a transmitting of the contact data providing trigger to at least one adjacent slave display(s) of the master display and configured for initiating a receiving of the contact data of the at least one adjacent slave display(s) of the master display; a second initiating sub-component configured for initiating a transmitting the contact data providing trigger instruction to a slave display(s) and configured for initiating a receiving of the contact data of the at least one adjacent slave display(s) of the slave display; a position identification sub-component configured for identifying a position of the master display and the at least one slave display(s) in the large screen display based on the received contact data of the at least one adjacent slave display(s) of the master display and the received contact data of the at least one adjacent slave display(s) of the slave display and for providing position data of the master display and the at least one slave display(s); and/or a processing sub-component configured for processing the received image data provided by the image data receiving component based on the position data.

In an embodiment of the master display, master display further comprises at least one gravitational sensor(s) communicatively coupled to the control system component, the at least one gravitational sensor(s) is configured for providing orientation data indicating the orientation of the master display, and/or at least one orientation data receiving component(s) configured for receiving orientation data from at least one slave display(s), wherein the control system component is further configured for processing the image data provided by the image data receiving component based on the position data and the orientation data of the master display and/or the receiving orientation data from at least one slave display(s).

By including a gravitational sensor into the master display and considering the orientation data provided by the master display and or the received orientation data of the at least one slave display in the processing of the image data, the accuracy and reliability of the processed image data can be increased.

In an embodiment of the master display, the slave display existence data is the unique ID of each one of the at least one slave display(s).

In an embodiment of the master display, the contact data providing trigger is a mechanical, optical, electronic magnetic, sonic or radio frequency pulse.

In a further aspect, a slave display is presented. The slave display of a large screen display, comprises an image data receiving component for receiving processed image data from the master display; a slave display existence request receiving component configured for receiving a slave display existence request from the master display; a slave display existence data providing component configured for providing slave display existence data and for transmitting the slave display existence data to the master display; at least one contact data providing trigger receiving component(s) disposed on at least one edge(s) of the slave display and configured for receiving the contact data providing trigger transmitted by the master display; at least one contact identification component(s) disposed on at least one edge(s) of the slave display configured for providing contact data of the slave display; a contact data providing component configured for transmitting the contact data of the slave display to the master display when a contact data providing trigger is received; at least one contact data providing trigger instruction receiving component configured for receiving a contact data providing trigger instruction from the master display; at least one contact data providing trigger transmitting component configured for transmitting a contact data trigger to at least one adjacent display of the slave display; and a display element configured for displaying an image according to the processed image data.

In a further aspect, a slave display is presented. The slave display of a large screen display, comprises an image data receiving component for receiving image data and position data from the master display; a slave display existence request receiving component configured for receiving a slave display existence request from the master display; a slave display existence data providing component configured for providing slave display existence data and for transmitting the slave display existence data to the master display; at least one contact data providing trigger receiving component(s) disposed on at least one edge(s) of the slave display (20) and configured for receiving the contact data providing trigger transmitted by the master display; at least one contact identification component(s) disposed on at least one edge(s) of the slave display configured for providing contact data of the slave display; a contact data providing component configured for transmitting the contact data of the slave display to the master display when a contact data providing trigger is received; at least one contact data providing trigger instruction receiving component configured for receiving a contact data providing trigger instruction from the master display; at least one contact data providing trigger transmitting component configured for transmitting a contact data trigger to at least one adjacent display of the slave display; a control system component communicatively coupled to the image data receiving component, the slave display existence request receiving component, the slave display existence data providing component, the at least one contact data providing trigger receiving component(s), the at least one contact identification component(s), the contact data providing component, the at least one contact data providing trigger instruction receiving component, and at least one contact data providing trigger transmitting component, wherein the control system component is configured for processing the received image data based on the received position data; and a display element configured for displaying an image according to the processed image data.

In an embodiment of the slave display, the slave display further comprises an image data providing component communicatively coupled to the control system component of the slave display, wherein the image data providing component is configured for providing the image data to at least one slave display(s) or for providing the received image data with the provided position data to at least one slave display(s); and/or a contact data providing trigger generating component configured for generating a contact data trigger when the contact data providing trigger instruction is received; and/or wherein the control system component comprises a processing sub-component configured for processing the received image data provided by the image data receiving component based on the position data.

In an embodiment of the slave display, the slave display further comprises at least one gravitational sensor communicatively coupled to the control system component, the at least one gravitational sensor configured for providing orientation data indicating the orientation of the slave display, wherein the control system component is further configured for processing the received image data based on the position data of the slave display and the orientation data.

By including a gravitational sensor into the slave display and/or by using the orientation data in the processing of the image data, the accuracy and reliability of the processed data can be increased.

In a further aspect, a large screen display is presented. The large screen display comprises a master display as described above and at least one slave display as described above. In an embodiment of the large screen display, the large screen display is a display screen consisting of more than a 3x3 large screen display. For instance, the large screen display may be a 4x4 or a 10x10 large screen display but is not limited thereto. Alternatively, the large screen display may have an irregular configuration like a X-form, a U-Form, or a L-form but is not limited thereto.

In further aspect, a method applied to a large screen display is provided. The method applied to a large screen display comprises the following steps of: communicatively coupling a master display and at least one slave display(s); receiving image data by the master display; transmitting by the master display a slave display existence request to at least one slave display(s); receiving a slave display existence request by at least one slave display(s) and transmitting slave display existence data by at least one slave display to the master display; receiving the slave display existence data by the master display; setting an order of the received slave display existence data by the master display; providing and transmitting a contact data providing trigger to at least one adjacent slave display(s) of the master display; receiving contact data by the master display from the at least one adjacent slave display(s) of the master display; subsequently and in the set order, providing and transmitting by the master display contact data providing trigger instructions to a slave display for instructing the slave display to provide a contact data providing trigger to at least one adjacent slave display(s) of the slave display and receiving by the master display contact data from the at least one adjacent slave display(s) of the slave display(s); identifying by the master display a position of the master display and the at least one slave display(s) in the large screen display based on the contact data from the at least one adjacent slave display(s) of the master display and the contact data from the at least one adjacent slave display(s) of the slave display(s) and providing position data based on the contact data; processing by the master display image data based on the position data; providing the image data processed by the master display based on the position data to the at least one slave display(s); and displaying by a display element of the at least one slave display(s) an image according to the processed image data and displaying by a display element of the master display an image according to the processed image data.

In further aspect, a method applied to a large screen display is provided. The method applied to a large screen display comprises the following steps: communicatively coupling a master display and at least one slave display(s); receiving image data by the master display; transmitting by the master display a slave display existence request to at least one slave display(s); receiving a slave display existence request by at least one slave display(s) and transmitting slave display existence data by at least one slave display to the master display; receiving the slave display existence data by the master display; setting an order of the received slave display existence data by the master display; providing and transmitting a contact data providing trigger to at least one adjacent slave display(s) of the master display; receiving contact data by the master display from the at least one adjacent slave display(s) of the master display; subsequently and in the set order, providing and transmitting by the master display contact data providing trigger instructions to a slave display for instructing the slave display to provide a contact data providing trigger to at least one adjacent slave display(s) of the slave display and receiving by the master display contact data from the at least one adjacent slave display(s) of the slave display(s); identifying by the master display a position of the master display and the at least one slave display(s) in the large screen display based on the contact data from the at least one adjacent slave display(s) of the master display and the contact data from the at least one adjacent slave display(s) of the slave display(s) and providing position data based on the contact data; processing by the master display image data based on the position data; providing the image data received by the master display and the position data provided by the master display to at least one slave display(s); receiving the image data and the provided position data by at least one slave display(s); processing by the at least one slave display(s) the image data provided by the master display based on the received position data; and displaying by a display element of the at least one slave display(s) an image according to the processed image data of the control system component of the at least one slave display(s) and displaying by a display element of the master display an image according to the processed image data.

By setting an order of the received slave display existence data, requesting contact data of at least one slave display in the set order of the received slave display existence data by the master display, receiving contact data, and identifying, by the master display, a position of the master display and the at least one slave display(s) in the large screen display based on the contact data of the master display and the contact data of the at least one slave display(s), an automatic configuration of large display screens above the 3x3 size can be provided such that a reduction of the time-consumption of a configuration of a multi-display arrangement and an increased practicality of the multi-display arrangement can be provided.

In the following, the disclosure or further embodiments and advantages of the disclosure are explained in more detail based on drawings, wherein the drawings describe only embodiments of the disclosure. Identical components in the drawings are given the same reference signs. Elements drawn with dashed lines are considered as optional elements.

The drawings are not to be regarded as true to scale, and individual elements of the drawings may be shown in exaggeratedly large or exaggeratedly simplified form.

### BRIEF DESCRIPTION OF THE DRAWINGS

In the following, the present disclosure is described with reference to the enclosed figures:
Fig. 1 illustrates a master display according to the present disclosure.
Fig. 2 illustrates an exemplary embodiment of the master display of Fig. 1.
Fig. 3 illustrates a first slave display according to the present disclosure.
Fig. 4 illustrates an exemplary embodiment of the slave display of Fig. 3.
Fig. 5 illustrates a second slave display according to the present disclosure.
Fig. 6 illustrates an exemplary embodiment of the slave display of Fig. 5.
Fig. 7 illustrates a first embodiment of the arrangement of contact identification components
Fig. 8 illustrates a second embodiment of the arrangement of contact identification components
Fig. 9 illustrates a first embodiment of a connection of a large screen display.
Fig. 10 illustrates a second embodiment of a connection of a large screen display.
Fig. 11 illustrates a first method applied to a large screen display.
Fig. 12illustrates a second method applied to a large screen display.
Fig. 13 illustrates a method for providing the position data.
Fig. 14a to 14r illustrates an exemplary embodiment of the method for providing the position data according to Fig. 13.
Fig. 15a to 15g illustrated another exemplary embodiment of the method for providing the position data according to Fig. 13.

### DETAILED DESCRIPTION OF EMBODIMENT

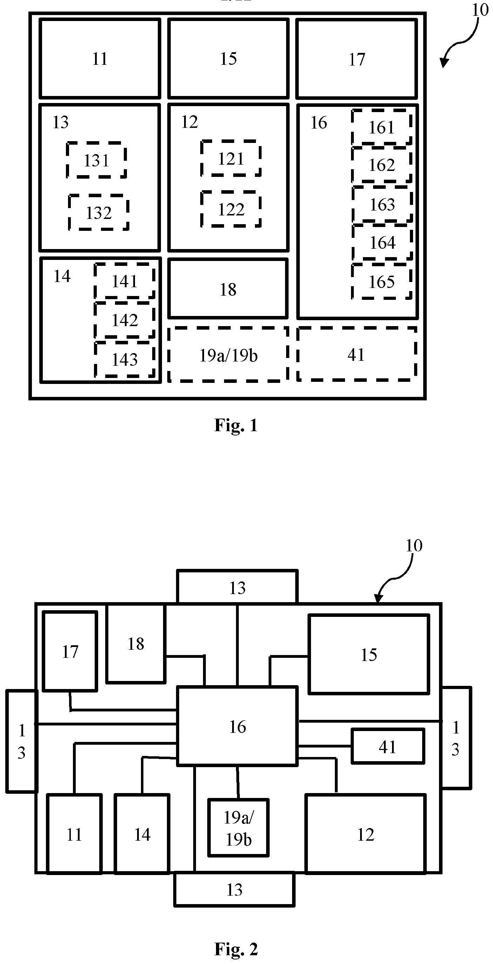

Fig. 1 shows a master display according to the present disclosure. The master display 10 of a large screen display 40 comprises an image data receiving component 11, a slave display existence identification component 12, at least one master display contact identification component(s) 13, a slave display contact identification component 14, a contact data receiving component 15, a control system component 16, and a display element 17.

The image data receiving component 11 is configured for receiving image data.

The slave display existence identification component 12 is configured for requesting and receiving slave display existence data from at least one slave display(s) 20.

Optionally, the slave display existence identification component 12 comprises a slave display existence request providing sub-component 121 and a slave display existence data receiving sub-component 122. The slave display existence request providing sub-component 121 is configured for providing and is configured for transmitting a slave display existence request to at least one slave display 20. The slave display existence data receiving sub-component 122 is configured for receiving slave display existence data from at least one slave display 20.

The at least one master display contact identification component(s) 13 is disposed on at least one edge(s) of the master display 10 configured for providing and transmitting a contact data providing trigger to at least one adjacent slave display(s) 20 of the master display 10. Additionally, the at least one master display contact identification component(s) 13 is configured for receiving a contact data providing trigger by at least one slave display(s) 10 being adjacent to the master display 20.

Optionally, the at least one master display contact identification component 13 comprises a contact data providing trigger generating sub-component 131 and a contact data providing trigger transmitting sub-component 132. The contact data providing trigger generating sub-component 131 is configured for generating a contact data providing trigger. The contact data providing trigger transmitting sub-component 132 is configured for transmitting the provided contact data providing trigger to at least one adjacent slave display(s) 20 of the master display 10.

The slave display contact identification component 14 is configured for providing a contact data providing trigger instruction and for transmitting the contact data providing trigger instruction to a slave display 20 for instructing the slave display 20 to provide a contact data providing trigger to at least one adjacent slave display(s) 20 of the slave display 20.

Optionally, the slave display contact identification component 14 comprises a contact data providing trigger instruction generating sub-component 141 and a contact data providing trigger instruction transmitting sub-component 142, or a contact data providing trigger instruction generating sub-component 141, a contact data providing trigger generating sub-component 143 configured for generating a contact data providing trigger; and a contact data providing trigger instruction transmitting sub-component 142. The contact data providing trigger instruction generating sub-component 141 is configured for generating a contact data providing trigger instruction. The contact data providing trigger generating sub-component 143 is configured for generating a contact data providing trigger. The contact data providing trigger instruction transmitting sub-component 142 is configured for transmitting the contact data providing trigger instruction and/or the contact data providing trigger to a slave display 20.

The contact data receiving component 15 is configured for receiving contact data from the at least one adjacent slave display(s) 20 of the master display 10 and for receiving contact data from the at least one adjacent slave display(s) 20 of the slave display 20.

The control system component 16 is communicatively coupled to the image data receiving component 11, the slave display existence identification component 12, the at least one master display contact identification component(s) 13, the slave display existence identification component 14, and the contact data receiving component 15. The control system component 16 is configured for setting an order of the at least one slave display(s) 20 based on received slave display existence data, initiating by the master display contact identification component a transmitting of the contact data providing trigger to at least one adjacent slave display(s) 20 of the master display 10 and initiating a receiving of the contact data of the at least one adjacent slave display(s) 20 of the master display 10, in particular the contact data receiving component 15, initiating subsequently in the set order a transmitting of the contact data providing trigger instruction to a slave display 20 and initiating a receiving of the contact data of the at least one adjacent slave display(s) 20 of the slave display 20, identifying a position of the master display 10 and the at least one slave display(s) 20 in the large screen display 40 based on the received contact data of the at least one adjacent slave display(s) 20 of the master display 10 and the received contact data of the at least one adjacent slave display(s) 20 of the slave display 20, and processing the image data provided by the image data receiving component 11 based on the position data.

Optionally, the control system component 16 comprises an order setting sub-component 161, a first initiating sub-component 162, a second initiating sub-component 163, a position identification sub-component 164 and/or a processing sub-component 165. The order setting sub-component 161 is configured for setting an order of the received slave display existence data. The first initiating sub-component 162 is configured for initiating a transmitting of the contact data providing trigger to at least one adjacent slave display(s) 20 of the master display 10 and is configured for initiating a receiving of the contact data of the at least one adjacent slave display(s) 20 of the master display 10. The second initiating sub-component 163 is configured for initiating a transmitting of the contact data providing trigger instruction to a slave display(s) 20 and configured for initiating a receiving of the contact data of the at least one adjacent slave display(s) 20 of the slave display 10. The position identification sub-component 164 is configured for identifying a position of the master display 10 and the at least one slave display(s) 20 in the large screen display 40 based on the received contact data of the at least one adjacent slave display(s) 20 of the master display 10 and the received contact data of the at least one adjacent slave display(s) 20 of the slave display 20 and is configured for providing position data of the master display 10 and the at least one slave display(s) 20. The processing sub-component 165 is configured for processing the received image data provided by the image data receiving component 11 based on the position data.

The display element 17 is communicatively coupled to the control system component 16 for displaying an image according to the processed image data.

Optionally, the master display 10 further comprises an image data providing component 18. The image data providing component 18 is communicatively coupled to the control system component 16. The image data providing component 18 is configured for providing the processed image data to the at least one slave display(s) 20 or is configured for providing the received image data with the provided position data to the at least one slave display(s) 20.

Optionally, the master display 10 further comprises at least one gravitational sensor 19a and/or at least one orientation data receiving component 19b. The at least one gravitational sensor 19a is communicatively coupled to the control system component 16, wherein the at least one gravitational sensor 19a is configured for providing orientation data indicating the orientation of the master display 10. The at least one orientation data receiving component 19b may be a circuit, an integrated circuit, a chip or a set of chips. The at least one orientation data receiving component 19b is configured for receiving orientation data from at least one slave display 20. The control system component 16 is further configured for processing the image data provided by the image data receiving component 11 based on the position data and the orientation data of the master display 10 and/or the receiving orientation data from at least one slave display 20.

Optionally, the master display 10 further comprises a master display component control interface 41.

Fig. 2 shows an exemplary embodiment of the master display of Fig. 1. The master display 10 comprises an image data receiving component 11. The image data receiving component 11 is communicatively coupled to a control system component 16 by a wire. The master display 10 further comprises a slave display existence identification component 12. The slave display existence identification component 12 is communicatively coupled to a control system component 16. Further, the master display 10 comprises at least one master display contact identification component(s) 13. Each of at least one master display contact identification component(s) 13 is arranged on each edge/sidewall of the master display 10. The at least one master display contact identification component(s) 13 is communicatively coupled to a control system component 16. Further, the master display comprises a slave display contact identification component 14. The slave display contact identification component 14 is communicatively coupled to a control system component 16. Further, the master display comprises a contact data receiving component 15. The contact data receiving component 15 is communicatively coupled to a control system component 16. Further, the master display 10 comprises a display element 17. The display element 17 is communicatively coupled to a control system component 16. The master display 10 further comprises a gravitational sensor 19a and/or an orientation data receiving component 19b. The gravitational sensor 19a and/or the orientation data receiving component 19b is communicatively coupled by wire to the control system component 16. Furthermore, the master display 10 comprises a master display control interface 41. The master display control interface 41 is on screen display (OSD) displayed on display element 17. The master display control interface 41 is executed by the control system component 16 according to a user's operation.

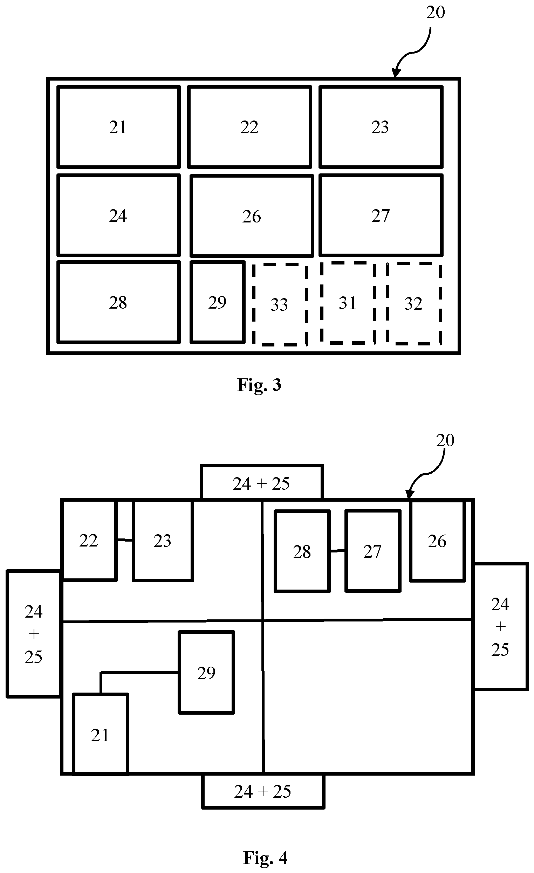

Fig. 3 shows a first embodiment of a slave display according to the present disclosure. The slave display 20 of a large screen display 40, comprises an image data receiving component 21, a slave display existence request receiving component 22, a slave display existence data providing component 23, at least one contact data providing trigger receiving component(s) 24, at least one contact identification component(s) 25, a contact data providing component 26, at least one contact data providing trigger instruction receiving component(s) 27, at least one contact data providing trigger transmitting component(s) 28, and a display element 29. The image data receiving component 21 is configured for receiving processed image data from the master display 10. The slave display existence request receiving component 22 is configured for receiving a slave display existence request from the master display 10. The slave display existence data providing component 23 is configured for providing slave display existence data and for transmitting the slave display existence data to the master display 10. The at least one contact data providing trigger receiving component(s) 24 is disposed on at least one edge(s) of the slave display 20 and is configured for receiving the contact data providing trigger transmitted by the master display 10. The at least one contact identification component(s) 25 is disposed on at least one edge(s) of the slave display 20 configured for providing contact data of the slave display 20. The contact data providing component 26 is configured for transmitting the contact data of the slave display 20 to the master display 10 when a contact data providing trigger is received. The at least one contact data providing trigger instruction receiving component(s) 27 is configured for receiving a contact data providing trigger instruction from the master display 10. The at least one contact data providing trigger transmitting component(s) 28 is configured for transmitting a contact data trigger to at least one adjacent display 10, 20 of the slave display 20. The display element 29 configured for displaying an image according to the processed image data.

Optionally, the slave display 20 further comprises an image data providing component 31. The image data providing component 31 is communicatively coupled to the image data receiving component 21 of the slave display 20. The image data providing component 31 is configured for providing the image data to at least one slave display(s) 20 or for providing the received image data with the provided position data to at least one slave display(s) 20.

Optionally, the slave display 20 further comprises a contact data providing trigger generating component 32. The contact data providing trigger generating component 32 is configured for generating a contact data trigger when the contact data providing trigger instruction is received.

Optionally, the slave display 20 comprises a gravitational sensor 33.

Fig. 4 shows an exemplary embodiment of the slave display of Fig. 3. The slave display 20 comprises an image data receiving component 21. The image data receiving component 21 is communicatively coupled to the display element 29. Further, the slave display comprises a slave display existence request receiving component 22. The slave display existence request receiving component 22 is communicatively coupled to the slave display existence data providing component 23. Further, the slave display comprises a slave display existence data providing component 23. The slave display existence data providing component 23 is communicatively coupled to the slave display existence request receiving component 22. Further, the slave display comprises at least one contact data providing trigger receiving component(s) 24. The at least one contact data providing trigger receiving component(s) 24 is not communicatively coupled to any one of the components of the slave display 20. Further, the slave display comprises at least one, in particular four, contact identification component(s) 25. Each of the at last one contact identification component(s) 25 are arranged on each edge/sidewall of the slave display 20. The at least one contact identification component(s) 25 are connected to each other. The at least one contact data providing trigger receiving component(s) 24 and the at least one, in particular four, contact identification component(s) 25 are provided in or as a same component. Further, the slave display comprises a contact data providing component 26. The contact data providing component 26 is not communicatively coupled to any one of the components of the slave display 20. Further, the slave display comprises at least one contact data providing trigger instruction receiving component(s) 27. The at least one contact data providing trigger instruction receiving component(s) 27 is communicatively coupled to the at least one contact data providing trigger transmitting component(s) 28. Further, the slave display comprises at least one contact data providing trigger transmitting component(s) 28. The at least one contact data providing trigger transmitting component(s) 28 is communicatively coupled to the at least one contact data providing trigger instruction receiving component(s) 27. Further, the slave display comprises a display element 29. The display element 29 is communicatively coupled to the image data receiving component 21.

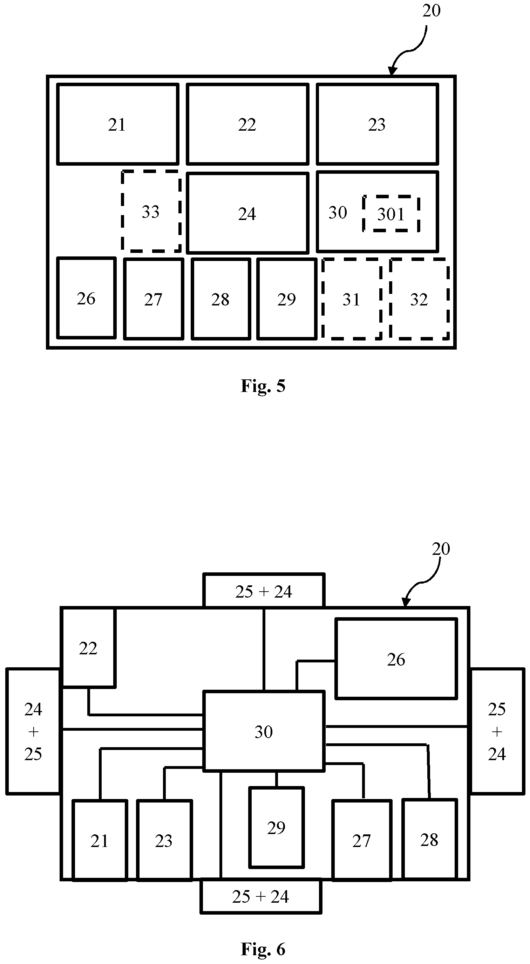

Fig. 5 shows a second exemplary embodiment of a slave display according to the present disclosure. The difference of the second slave display to the first slave display is that the first slave display already receives processed image data from the master display. The second slave display just gets the received image data, meaning unprocessed by the master display, and will do the processing by itself (the control system component of the second slave display).

A slave display 20 of a large screen display 40, comprises an image data receiving component 21, a slave display existence request receiving component 22, a slave display existence data providing component 23, at least one contact data providing trigger receiving component(s) 24, at least one contact identification component(s) 25, a contact data providing component 26, at least one contact data providing trigger instruction receiving component 27, at least one contact data providing trigger transmitting component 28, a control system component 30, and a display element 29.

The image data receiving component 21 is configured for receiving image data and position data from the master display 10. The slave display existence request receiving component 22 is configured for receiving a slave display existence request from the master display. The slave display existence data providing component 23 is configured for providing slave display existence data and for transmitting the slave display existence data to the master display 10. The at least one contact data providing trigger receiving component(s) 24 is disposed on at least one edge(s) of the slave display (20) and is configured for receiving the contact data providing trigger transmitted by the master display 10. The at least one contact identification component(s) 25 is disposed on at least one edge(s) of the slave display 20 and is configured for providing contact data of the slave display 20. The contact data providing component 26 is configured for transmitting the contact data of the slave display 20 to the master display 10 when a contact data providing trigger is received. The at least one contact data providing trigger instruction receiving component 27 is configured for receiving a contact data providing trigger instruction from the master display 10. The at least one contact data providing trigger transmitting component 28 is configured for transmitting a contact data trigger to at least one adjacent display 10, 20 of the slave display 20. The control system component 30 is communicatively coupled to the image data receiving component 21, the slave display existence request receiving component 22, the slave display existence data providing component 23, the at least one contact data providing trigger receiving component(s) 24, the at least one contact identification component(s) 25, the contact data providing component 26, the at least one contact data providing trigger instruction receiving component 27, and at least one contact data providing trigger transmitting component 28. The control system component 30 is configured for processing the received image data based on the received position data. The display element 29 is configured for displaying an image according to the processed image data.

Optionally, the slave display 20 comprises a gravitational sensor 33.

Optionally, the slave display 20 further comprises an image data providing component 31. The image data providing component 31 is communicatively coupled to the control system component 30 of the slave display 20. The image data providing component 31 is configured for providing the image data to at least one slave display(s) 20 or for providing the received image data with the provided position data to at least one slave display(s) 20.

Optionally, the slave display 20 further comprises a contact data providing trigger generating component 32. The contact data providing trigger generating component 32 is configured for generating a contact data trigger when the contact data providing trigger instruction is received.

Optionally, the control system component 30 comprises a processing sub-component 301. The processing sub-component 301 configured for processing the received image data provided by the image data receiving component 21 based on the position data.

Fig. 6 shows an exemplary embodiment of the second slave display of Fig. 5. The slave display 20 comprises an image data receiving component 21. The image data receiving component 21 is communicatively coupled to a control system component 30. Further, the slave display 20 comprises a slave display existence request receiving component 22. The slave display existence request receiving component 22 is communicatively coupled to a control system component 30. Further, the slave display 20 comprises a slave display existence data providing component 23. The slave display existence data providing component 23 is communicatively coupled to a control system component 30. Further, the slave display 20 comprises at least one contact data providing trigger receiving component(s) 24. The contact data providing trigger receiving component is communicatively coupled to a control system component 30. Further, the slave display 20 comprises at least one contact identification component(s) 25. Each of the at last one contact identification component(s) are arranged on each edge/sidewall of the slave display 20. The at least one contact identification component(s) 25 is communicatively coupled to a control system component 30. The at least one contact data providing trigger receiving component(s) 24 and the at least one, in particular four, contact identification component(s) 25 are provided in or as a same component. Further, the slave display 20 comprises a contact data providing component 26. The contact data providing component is communicatively coupled to a control system component 30. Further, the slave display 20 comprises at least one contact data providing trigger instruction receiving component 27. The at least one contact data providing trigger instruction receiving component 27 is communicatively coupled to a control system component 30. Further, the slave display 20 comprises at least one contact data providing trigger transmitting component 28. The at least one contact data providing trigger transmitting component 28 is communicatively coupled to a control system component 30. Further, the slave display 20 comprises a display element 29. The display element 29 is communicatively coupled to a control system component 30.

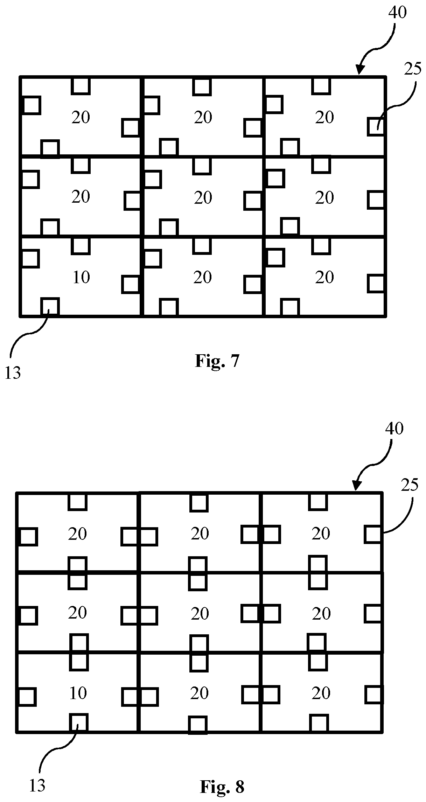

Fig. 7 shows a first embodiment of the arrangement of the master display contact identification components 13 of the master display 10 and the contact identification components 25 of the slave display 20. In the first embodiment, the arrangement of the contact identification components 13 and 25, used as sensing elements, are on each edge/sidewall of the master display 10 and on each edge/sidewall of the slave display 20. The contact identification components 13 and 25 are identical. To ensure that the contact identification components 13 and 25 work properly and satisfactorily, the contact identification components 13 and 25 are arranged offset and respectively shifted to each other. More specifically, the contact identification components 13 and 25 may be magnetic detectors. The magnetic detector comprises an emitter and a receiver. The emitter of the magnetic detector is driven by electrical current pulse to generate a variation of magnetic field. For example, the master display 10 requests one of the slave displays 20 to drive the four magnetic detectors of the one of the slave displays 20. The emitters of the four magnetic detectors of the one of the slave displays 20 generate variations of magnetic field. And then at least one receiver of at least one magnetic detector of at least one adjacent slave display(s) 20 may receive the variation of magnetic field. Therefore, at least one contact data is generated by the at least one adjacent slave display(s) 20. The contact data is transmitted to the master display 10.

Fig. 8 shows a second embodiment of the arrangement of contact identification components 13 and 25. In the second embodiment of the arrangement of contact identification components 13 and 25, the master display 10 and the slave display 20 comprise optical contact identification components 13 and 25. The contact identification components 13 and 25 are arranged on each edge/sidewall of the master display 10 and on each edge/sidewall of the slave display 20. The contact identification components 13 and 25 are identical. An optical contact identification component 13 and 25 comprises an emitter and a receiver. To ensure that the contact identification components 13 and 25 work properly and satisfactorily, the contact identification components 13 and 25 are aligned to each other such that the transmitted light from one display 10 or 20 can be received from another display 10 or 20 and vice versa. More specifically, the master display 10 requests one of the slave display 20 to drive the four optical contact identification components 25 of the one of the slave display 20. The emitters of the optical contact identification components 25 of the one of the slave display 20 emits a light with pulse. And then at least one receiver of at least one optical sensor of at least one adjacent slave display(s) 20 may receive the light with pulse. Therefore, at least one contact data is generated by the at least one adjacent slave display(s) 20. The contact data is transmitted to the master display 10. In other embodiments, the contact identification components 13 and 25 may be a mechanical contact switch which comprises a protruding portion and a touch portion. The mechanical contact switch connects with an actuator. For example, the actuator may drive the protruding portion of one of slave displays in pulse. And then the protruding portion of one of slave display may touch the touch portion of the mechanical contact switch of the adjacent slave display. In the same concept of the invention, the contact identification components 13 and 25 may be a pressure sensor, a tactile sensor, an infrared sensor, and an RFID communication element but is not limited thereto.

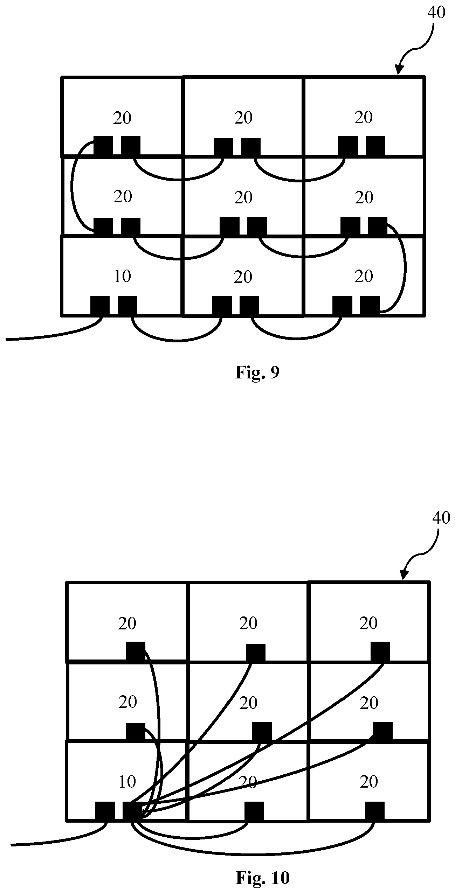

Fig. 9 shows a first embodiment of a connection of a large screen display. The master display 10 is communicatively coupled to the external host (it is not shown). The master display 10 and the plurality of slave displays 20 of the large screen display 30 are connected one by one in a serial daisy chain with - but not limited to - a HDMI cable or a USB cable. In other words, when an image data provided by the external host is transmitted from the master display 10 to the plurality of slave displays 20 one by one. The following slave displays 20 are linked, coupled or connected to the master display 10 as a series. The connection forms an open loop not a closed loop.

Fig. 10 shows a second embodiment of a connection of a large screen display. The master display 10 is communicatively coupled to the external host with e.g. HDMI cable or USB cable. Each one of the slave displays 20 is separately and independently communicatively coupled to the master display 10, with e.g. HDMI cable or USB cable, for receiving the image data.

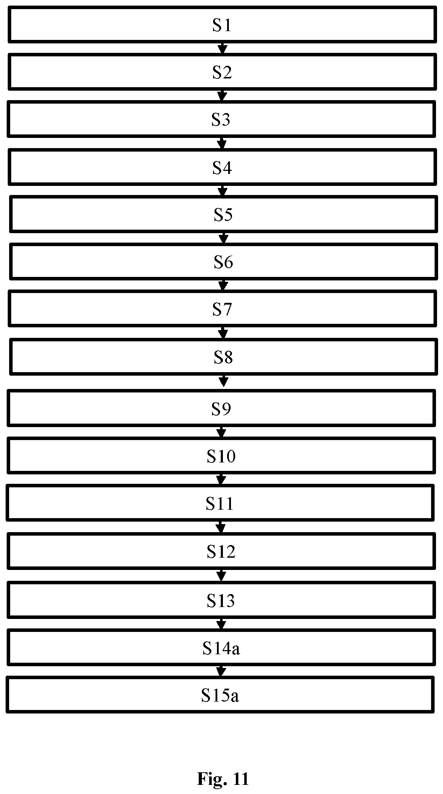

Fig. 11 shows a first method applied to a large screen display. In a first step S1, the master display 10 and at least one slave display(s) 20 are communicatively coupled. In a second step S2, image data are received by the master display 10. In a third step S3, a slave display existence request is transmitted by the master display 10 to at least one slave display(s) 20. In a fourth step S4, a slave display existence request is received by at least one slave display(s) 20 and the slave display existence data are transmitted by at least one slave display 20 to the master display 10. In a fifth step S5, the slave display existence data are received by the master display 10. In a sixth step S6, an order of the received slave display existence data is set by the master display 10. In a sept step S7, a contact data providing trigger is provided and transmitted to at least one adjacent slave display(s) 20 of the master display 10. In an eighth step S8, contact data are received by the master display 10 from the at least one adjacent slave display(s) 20 of the master display 10. In a nineth step S9, subsequently and in the set order, contact data providing trigger instructions are provided and transmitted by the master display 10 to a slave display 20 for instructing the slave display 20 to provide a contact data providing trigger to at least one adjacent slave display(s) 20 of the slave display 20. In a tenth step S10, contact data from the at least one adjacent slave display(s) 20 of the slave display(s) 20 are received by the master display 10. In an eleventh step S11, a position of the master display 10 and the at least one slave display(s) 20 in the large screen display 40 is identified by the master display 10 based on the contact data from the at least one adjacent slave display(s) 20 of the master display 10 and the contact data from the at least one adjacent slave display(s) 20 of the slave display(s) 20. In a step S12, position data are provided based on the contact data. In a thirteenth step S13, image data are processed by the master display 10 based on the position data. In a fourteenth step S14a, the image data processed by the master display 10 based on the position data are provided to the at least one slave display(s) 20. In a fifteenth step S15a, the at least one slave display(s) 20 displays by a display element 29 an image according to the processed image data and displays by a display element 17 of the master display 10 an image according to the processed image data.

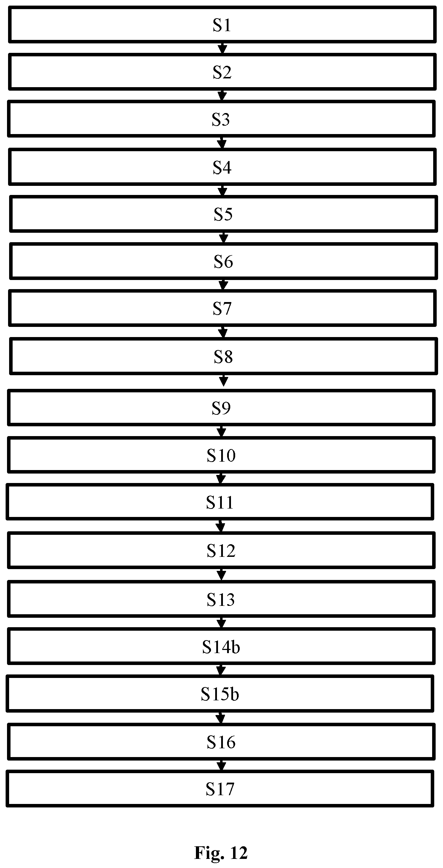

Fig. 12 shows a second method applied to a large screen display. In this second method, the control system component of the slave display is able to process the received image data. Contrary in the first method, the slave display in the first method receives the processed image data being provided by the master display according to the position data of the slave display.

In a first step S1, the master display 10 and at least one slave display(s) 20 are communicatively coupled. In a second step S2, image data are received by the master display 10. In a third step S3, a slave display existence request is transmitted by the master display 10 to at least one slave display(s) 20. In a fourth step S4, a slave display existence request is received by at least one slave display(s) 20 and the slave display existence data are transmitted by at least one slave display 20 to the master display 10. In a fifth step S5, the slave display existence data are received by the master display 10. In a sixth step S6, an order of the received slave display existence data is set by the master display 10. In a sept step S7, a contact data providing trigger is provided and transmitted to at least one adjacent slave display(s) 20 of the master display 10. In an eighth step S8, contact data are received by the master display 10 from the at least one adjacent slave display(s) 20 of the master display 10. In a nineth step S9, subsequently and in the set order, contact data providing trigger instructions are provided and transmitted by the master display 10 to a slave display 20 for instructing the slave display 20 to provide a contact data providing trigger to at least one adjacent slave display(s) 20 of the slave display 20. In a tenth step S10, contact data from the at least one adjacent slave display(s) 20 of the slave display(s) 20 are received by the master display 10. In an eleventh step S11, a position of the master display 10 and the at least one slave display(s) 20 in the large screen display 40 is identified by the master display 10 based on the contact data from the at least one adjacent slave display(s) 20 of the master display 10 and the contact data from the at least one adjacent slave display(s) 20 of the slave display(s) 20. In a step S12, position data are provided based on the contact data. In a thirteenth step S13, image data are processed by the master display 10 based on the position data. In a fourteenth step S 14b, the image data received by the master display 10 and the position data provided by the master display 10 are provided to at least one slave display(s) 20. In a fifteenth step S15b, the image data and the provided position data are received by at least one slave display(s) 20. In a sixteenth step S16, the image data provided by the master display 10 are processed S16 by the at least one slave display(s) 20 based on the received position data. In a seventeenth step S 17, an image according to the processed image data of the control system component 30 of the at least one slave display(s) 20 is displayed by a display element 29 of the at least one slave display(s) 20 and an image according to the processed image data is displayed by a display element 17 of the master display 10.

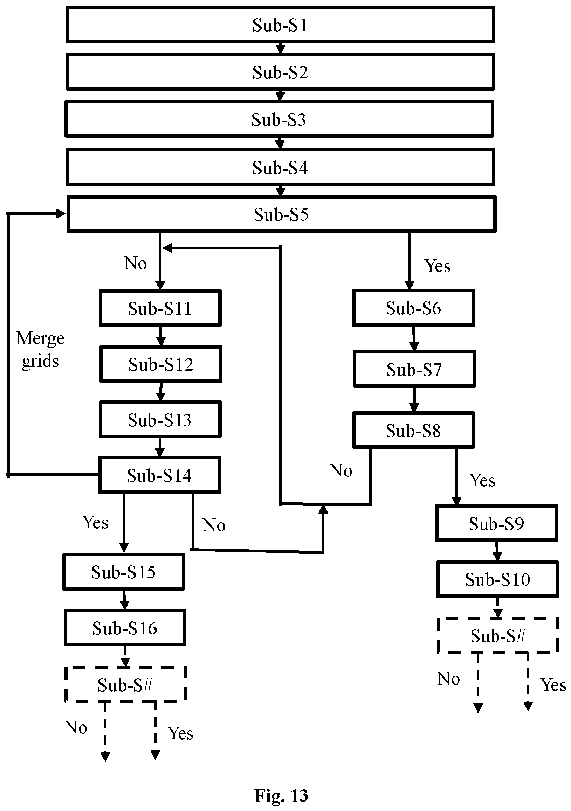

Fig. 13 illustrates a method for providing the position data. In a first sub-step Sub-S 1, the order of the received slave display existence data from the order setting component is received. In a second sub-step Sub-S2, the master display is virtually positioned in a corner of a virtual grid. In a third sub-step Sub-S3, the position identification component triggers the first initiating sub-component to transmit the contact data providing trigger by the at least one master display contact identification component(s) to at least one adjacent slave display(s) of the master display and to receive the contact data of the at least one adjacent slave display(s) of the master display by the master display, in particular contact data receiving component. In a fourth sub-step Sub-S4, the master display is virtually shifted to another position of the virtual grid, when the contact data of the at least one adjacent slave display(s) of the master display indicates that the master display needs to be in a different position of the virtual grid. In a fifth sub-step Sub-S5, the position identification component checks if the slave display being the first slave display in the order has provided contact data to the master display. If the first slave display in the order has provided contact data to the master display, a sixth sub-step Sub-S6 and a seventh sub-step Sub-S7 follows. In a sixth sub-step Sub-S6, the position identification component triggers the second initiating component to initiate/trigger by the slave display contact identification component, subsequently in the set order, a transmitting of the contact data providing trigger instruction to the first slave display in the order for instructing the first slave display to provide a contact data providing trigger to at least one adjacent slave display(s) of the first slave display. Further, in the sixth sub-step Sub-S6, the position identification component triggers the second initiating component to initiate/trigger a receiving of the contact data of the at least one adjacent slave display(s) of the first slave display by the master display, in particular by the contact data receiving component. In a seventh sub-step Sub-S7, the master display and the first slave display in the order are virtually shifted to another position of the virtual grid, when the contact data of the at least one adjacent slave display(s) of the first slave display in the order indicates that the master display and the first slave display in the order needs to be in a different position of the virtual grid. In an eight sub-step Sub-S8, the position identification component checks if the slave display being the next slave display in the order has provided contact data to the master display. If the next slave display in the order has provided contact data to the master display, a nineth sub-step Sub-S9 and a tenth sub-step Sub-S 10 follows. In a nineth sub-step Sub-S9, the position identification component triggers the second initiating component to initiate/trigger by the slave display contact identification component, subsequently in the set order, a transmitting of the contact data providing trigger instruction to the next slave display in the order for instructing the next slave display in the order to provide a contact data providing trigger to at least one adjacent slave display(s) of the next slave display. Further, in the nineth sub-step Sub-S9, the position identification component triggers the second initiating component to initiate/trigger a receiving of the contact data of the at least one adjacent slave display(s) of the next slave display in the order to the master display. In a tenth sub-step Sub-S10, the master display, the first slave display in the order, and the next slave display in the order are virtually shifted to another position of the virtual grid, when the contact data of the at least one adjacent slave display(s) of the next slave display in the order indicates that the master display, the first slave display in the order, and the next slave display in the order needs to be in a different position of the virtual grid. This proceeding may be repeated until the position identification component has received and considered each one of the slave displays being included in the order and/or until the first/next slave display in the order is not in/included the contact data of the master display/previous slave display (depicted in Fig. 13 as Sub-S#). If the first/next slave display in the order has not presented contact data to the master display, the following sub-steps follows. In an eleventh sub-step Sub-S 11, the first/next slave display is virtually shifted to a corner of another virtual grid. In a twelfth sub-step Sub-S 12, the position identification component triggers the second initiating component to initiate/trigger by the slave display contact identification component, subsequently in the set order, a transmitting of the contact data providing trigger instruction to the first/next slave display in the order for instructing the first/next slave display in the order to provide a contact data providing trigger to at least one adjacent slave display(s) of the first/next slave display. Further, in the twelfth sub-step Sub-S 12, the position identification component triggers the second initiating component to initiate/trigger a receiving of the contact data of the at least one adjacent slave display(s) of the first/next slave display in the order to the master display. In a thirteenth sub-step Sub-S13, the first/next slave display is virtually shifted to another position of the other virtual grid, when the contact data of the at least one adjacent slave display(s) of the first/next slave display indicates that the master display needs to be in a different position of the other virtual grid. In a fourteenth sub-step Sub-S 14, the position identification component checks if the next slave display being the next slave display in the order has presented contact data to the master display and checks the grid and the at least one other grid if there are any similarities, in particular similarities in the contact data of displays in the grid and in the at least one other grid. If the next slave display in the order has provided contact data to the master display and no similarity is identified, a fifteenth sub-step Sub-S15 and a sixteenth sub-step Sub-S16 follow. If the next slave display in the order has not provided contact data to the master display and no similarity is identified, the eleventh sub-step Sub-S 11, the twelfth sub-step Sub-S 12, the thirteenth sub-step Sub-S 13, and the fourteenth sub-step Sub-S14 are repeated. Alternatively, if the next slave display in the order has provided contact data to the master display and/or at least one similarity in the contact data of at least one display in the grid and the at least one other grid is identified, the position data and contact data of the displays of the other grid are included to the position data and contact data of the displays of the "first" grid, i.e. grid including the contact data and position data of the master display. Thereby, the identified position data of both grids can be merged together in one grid. In this context, the term "merging" may represent that cased on the included position data and contact data of the at least one other grid, the sixteenth sub-step Sub-S16 is executed, such that displays in grid are virtually shifted to another position, when the position data and the contact data of the displays of the grid have to be in a different position based on the position data and the contact data of the other virtual grid. After the merging, the fifth sub-step Sub-S5 is executed. In the fifteenth sub-step Sub-S15, the position identification component triggers the second initiating component to initiate/trigger by the slave display contact identification component, subsequently in the set order, a transmitting of the contact data providing trigger instruction to the next slave display in the order for instructing the next slave display in the order to provide a contact data providing trigger to at least one adjacent slave display(s) of the next slave display. Further, in the fifteenth sub-step Sub-S15, the position identification component triggers the second initiating component to initiate/trigger a receiving of the contact data of the at least one adjacent slave display(s) of the next slave display in the order to the master display. In a sixteenth sub-step Sub-S16, the first/next slave display and the next slave display in the order are virtually shifted to another position of the virtual grid, when the contact data of the at least one adjacent slave display(s) of the first/next slave display and the next slave display in the order indicates that the first/next display and the next slave display in the order needs to be in a different position of the virtual grid. This proceeding may be repeated until the position identification component has received and considered each one of the slave displays being included in the order, until the next slave display in the order is not in/included the contact data of the previous first/next slave display and/or until the contact data of the next slave display comprises the slave display existence data of an already considered slave display and/or the master display (depicted in Fig. 13 as Sub-S#). In other words, in the last case, the other grid is merged to the first grid in order to merge both grids. The number of other virtual grids may be unlimited.

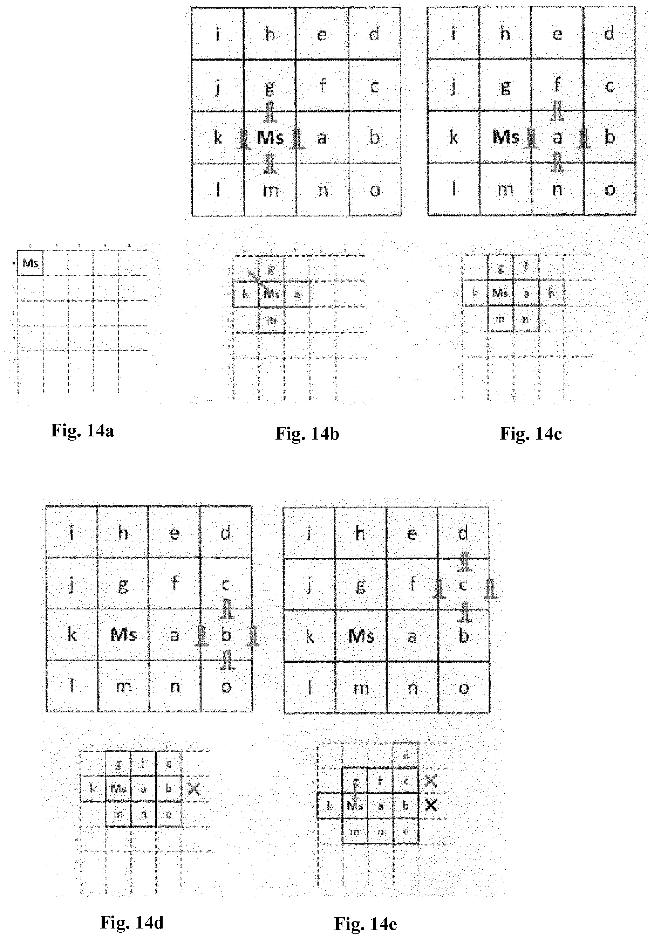

Figs. 14a to 14r show an exemplary embodiment of the method for providing the position data according to Fig. 13. In particular Figs. 14a to 14r illustrate a method for providing the position data in which only one grid is needed.

Fig. 14a shows the virtual positioning of the master display "Ms" in a corner of a virtual grid grid0. Therefore, the master display "Ms has the position [0;0]. Fig. 14a depicts the second sub-step Sub-S2 of the method for providing the position data according to Fig. 13.

Fig. 14b (top) shows the third sub-step Sub-S3 and the fourth sub-step Sub-S4 of the method for providing the position data according to Fig. 13. Before these two sub steps have been executed, it was identified that the large screen display comprises a master display and fifteen slave displays. In a first sub-step Sub-S1 before executing the third sub-step Sub-S3 and the fourth sub-step Sub-S4, the order of the received slave display existence data of each one of the slave displays was set based on which one of the slave display existence data was received first and which slave display existence data was received later. The order of the fifteen slave displays was set to "a to o", wherein "a to o" represents the slave display existence data of each one of the slave displays. Therefore, the slave display having the slave display existence data "a" was the slave display which provides first the slave display existence data respectively whose slave display existence data were received first. Each one of the slave displays is in a listen-and-report state after providing respectively transmitting the slave display existence data to the master display.

In the third sub-step Sub-S3, the position identification component triggers the first initiating sub-component to transmit the contact data providing trigger, i.e. a optical pulse, by all of the four master display contact identification components to at least one adjacent slave display(s) of the master display "Ms" and to receive the contact data of the at least one adjacent slave display(s) of the master display "Ms" by the master display Ms. On each edge of the master display "Ms" there is disposed one of the four master display contact identification components. The slave display having the slave display existence data "g" receives the contact data providing trigger by its contact data providing trigger receiving component being arranged at the bottom edge of the slave display. Therefore, the contact data of the slave display having the slave display existence data "g" is [B,g]. The slave display "g" provides the contact data to the master display, in particular the contact data receiving component. The slave display having the slave display existence data "m" receives the contact data providing trigger by its contact data providing trigger receiving component being arranged at the top edge of the slave display. Therefore, the contact data of the slave display having the slave display existence data "m" is [T,m]. The slave display "m" provides the contact data to the master display, in particular the contact data receiving component. The slave display having the slave display existence data "k" receives the contact data providing trigger by its contact data providing trigger receiving component being arranged at the left edge of the slave display. Therefore, the contact data of the slave display having the slave display existence data "k" is [L,k]. The slave display "k" provides the contact data to the master display, in particular the contact data receiving component. The slave display having the slave display existence data "a" receives the contact data providing trigger by its contact data providing trigger receiving component being arranged at the right edge of the slave display. Therefore, the contact data of the slave display having the slave display existence data "a" is [R,a]. The slave display "a" provides the contact data to the master display, in particular the contact data receiving component. Since, the contact data of the slave displays being adjacent to the master display indicate that the master display cannot be positioned at the position [0,0] in the grid, because there is a contact on the top edge to slave display "g" and a contact on the left edge to slave display "k", the master display is virtually shifted to another position, i.e. position [1,1] of the virtual grid (see Fig. 14b (bottom), and Sub step Sub-S4).

Fig. 14c (top) shows the fifth sub-step Sub-S5, the sixth sub-step Sub-S6, and the seventh sub-step Sub-S7 of the method for providing the position data according to Fig. 13. In the fifth sub-step Sub-S5, the position identification component checks, after providing the contact data of the at least one adjacent display(s) to the master display and the position data of the master display, if the slave display being the first slave display in the order has provided contact data to the master display. As can be taken from Fig. 14b and as described above, the slave display "a" has provided contact data to the master display 10. Therefore, the first slave display in the order has provided contact data to the master display, such that the sixth sub-step Sub-S6 and a seventh sub-step Sub-S7 follows. In the sixth sub-step Sub-S6, the position identification component triggers the second initiating component to initiate/trigger by the slave display contact identification component, subsequently in the set order, a transmitting of the contact data providing trigger instruction to the slave display "a" for instructing the slave display "a" to provide a contact data providing trigger, i.e. optical pulse, by the all of the four contact identification components to at least one adjacent slave display(s) of the slave display "a". On each edge of the slave display "a" there is disposed one of the four contact identification components. The slave display having the slave display existence data "f' receives the contact data providing trigger by its contact data providing trigger receiving component being arranged at the bottom edge of the slave display. Therefore, the contact data of the slave display having the slave display existence data "f" is [B,f]. The slave display "f' provides the contact data to the master display, in particular the contact data receiving component. The slave display having the slave display existence data "n" receives the contact data providing trigger by its contact data providing trigger receiving component being arranged at the top edge of the slave display. Therefore, the contact data of the slave display having the slave display existence data "n" is [T,n]. The slave display "n" provides the contact data to the master display, in particular the contact data receiving component. The master display "Ms" receives the contact data providing trigger by its contact data providing trigger receiving component being arranged at the right edge of the master display. Therefore, the contact data of the master display "Ms" is [R,Ms]. The slave display having the slave display existence data "b" receives the contact data providing trigger by its contact data providing trigger receiving component being arranged at the left edge of the slave display. Therefore, the contact data of the slave display having the slave display existence data "b" is [L,b]. The slave display "b" provides the contact data to the master display, in particular the contact data receiving component.

Since, the contact data of the at least one adjacent slave display of the slave display "a" indicate that the master display "Ms" can be positioned at the position [1,1] in the grid and the slave display "a" can be positioned at the position [1,2] in the grid, no virtual shift of the position master display "Ms" and the slave display "a" is executed (see Fig. 14c (bottom), and Sub step Sub-S7).

Fig. 14d (top) shows the eight sub-step Sub-S8, the nineth sub-step Sub-S9, and the tenth sub-step Sub-S 10 of the method for providing the position data according to Fig. 13. In the eight sub-step Sub-S8, the position identification component checks, after providing the contact data of the at least one adjacent display(s) to the master display and the position data of the master display, if the slave display being the next slave display in the order has provided contact data to the master display. As can be taken from Fig. 14c and as described above, the slave display "b" has provided contact data to the master display "Ms". Therefore, the next slave display in the order has provided contact data to the master display, such that the nineth sub-step Sub-S9 and the tenth sub-step Sub-S10 follows. In the nineth sub-step Sub-S9, the position identification component triggers the second initiating component to initiate/trigger by the slave display contact identification component, subsequently in the set order, a transmitting of the contact data providing trigger instruction to the slave display "b" for instructing the slave display "b" to provide a contact data providing trigger, i.e. optical pulse, by the all of the four contact identification components to at least one adjacent slave display(s) of the slave display "b". On each edge of the slave display "b" there is disposed one of the four contact identification components. The slave display having the slave display existence data "c" receives the contact data providing trigger by its contact data providing trigger receiving component being arranged at the bottom edge of the slave display. Therefore, the contact data of the slave display having the slave display existence data "c" is [B,c]. The slave display "c" provides the contact data to the master display, in particular the contact data receiving component. The slave display having the slave display existence data "o" receives the contact data providing trigger by its contact data providing trigger receiving component being arranged at the top edge of the slave display. Therefore, the contact data of the slave display having the slave display existence data "o" is [T,o]. The slave display "o" provides the contact data to the master display, in particular the contact data receiving component. No display receives the contact data providing trigger by its contact data providing trigger receiving component being arranged at the left edge of the display. The slave display having the slave display existence data "a" receives the contact data providing trigger by its contact data providing trigger receiving component being arranged at the right edge of the slave display. Therefore, the contact data of the slave display having the slave display existence data "a" is [R,a]. The slave display "a" provides the contact data to the master display, in particular the contact data receiving component.

Since, the contact data of the at least one adjacent display(s) of the slave display "b" indicate that the master display "Ms" can be positioned at the position [1,1] in the grid, the slave display "a" can be positioned at the position [1,2] in the grid, and the slave display "b" can be positioned at the position [1,3] in the grid, no virtual shift of the position master display "Ms", the slave display "a", and slave display "b" is executed (see Fig. 14d (bottom), and Sub step Sub-S 10).

Fig. 14e (top) shows a repetition of the eight sub-step Sub-S8, the nineth sub-step Sub-S9, and the tenth sub-step Sub-S10 of the method for providing the position data according to Fig. 13 for the next slave display. In the eight sub-step Sub-S8, the position identification component checks, after providing the contact data of the at least one adjacent display(s) to the master display and the position data of the master display, if the slave display being the next slave display in the order has provided contact data to the master display. As can be taken from Fig. 14d and as described above, the slave display "c" has provided contact data to the master display "Ms". Therefore, the next slave display in the order has provided contact data to the master display, such that the nineth sub-step Sub-S9 and the tenth sub-step Sub-S10 follows. In the nineth sub-step Sub-S9, the position identification component triggers the second initiating component to initiate/trigger by the slave display contact identification component, subsequently in the set order, a transmitting of the contact data providing trigger instruction to the slave display "c" for instructing the slave display "c" to provide a contact data providing trigger, i.e. optical pulse, by the all of the four contact identification components to at least one adjacent slave display(s) of the slave display "c". On each edge of the slave display "c" there is disposed one of the four contact identification components. The slave display having the slave display existence data "d" receives the contact data providing trigger by its contact data providing trigger receiving component being arranged at the bottom edge of the slave display. Therefore, the contact data of the slave display having the slave display existence data "d" is [B,d]. The slave display "d" provides the contact data to the master display, in particular the contact data receiving component. The slave display having the slave display existence data "b" receives the contact data providing trigger by its contact data providing trigger receiving component being arranged at the top edge of the slave display. Therefore, the contact data of the slave display having the slave display existence data "b" is [T,b]. The slave display "b" provides the contact data to the master display, in particular the contact data receiving component. No display receives the contact data providing trigger by its contact data providing trigger receiving component being arranged at the left edge of the display. The slave display having the slave display existence data "f" receives the contact data providing trigger by its contact data providing trigger receiving component being arranged at the right edge of the slave display. Therefore, the contact data of the slave display having the slave display existence data "f" is [R,f]. The slave display "f" provides the contact data to the master display, in particular the contact data receiving component.

Since, the contact data of the at least one adjacent display(s) of the slave display "c" indicate that the master display "Ms" cannot be positioned at the position [1,1] in the grid, because there is a contact on the top edge to slave display "g" and a contact on the left edge to slave display "k", the master display "Ms" is virtually shifted to the position [2,1] in the grid, the slave display "a" is shifted to the position [2,2] in the grid, the slave display "b" is shifted to the position [2,3] in the grid, and the slave display "c" is positioned to the position [1,3] in the grid (see Fig. 14e (bottom), and Sub step Sub-S10).

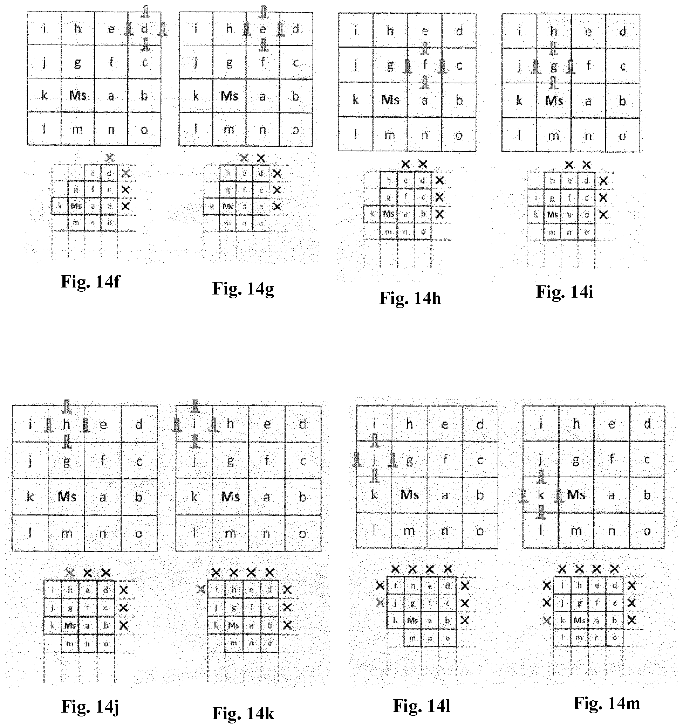

Fig. 14f (top) shows a repetition of the eight sub-step Sub-S8, the nineth sub-step Sub-S9, and the tenth sub-step Sub-S10 of the method for providing the position data according to Fig. 13 for the next slave display. In the eight sub-step Sub-S8, the position identification component checks, after providing the contact data of the at least one adjacent display(s) to the master display and the position data of the master display, if the slave display being the next slave display in the order has provided contact data to the master display. As can be taken from Fig. 14e and as described above, the slave display "d" has provided contact data to the master display "Ms". Therefore, the next slave display in the order has provided contact data to the master display, such that the nineth sub-step Sub-S9 and the tenth sub-step Sub-S10 follows. In the nineth sub-step Sub-S9, the position identification component triggers the second initiating component to initiate/trigger by the slave display contact identification component, subsequently in the set order, a transmitting of the contact data providing trigger instruction to the slave display "d" for instructing the slave display "d" to provide a contact data providing trigger, i.e. optical pulse, by the all of the four contact identification components to at least one adjacent slave display(s) of the slave display "d". On each edge of the slave display "d" there is disposed one of the four contact identification components. There is no display receiving the contact data providing trigger by its contact data providing trigger receiving component being arranged at the bottom edge of the display. The slave display having the slave display existence data "c" receives the contact data providing trigger by its contact data providing trigger receiving component being arranged at the top edge of the slave display. Therefore, the contact data of the slave display having the slave display existence data "c" is [T,c]. The slave display "c" provides the contact data to the master display, in particular the contact data receiving component. No display receives the contact data providing trigger by its contact data providing trigger receiving component being arranged at the left edge of the display. The slave display having the slave display existence data "e" receives the contact data providing trigger by its contact data providing trigger receiving component being arranged at the right edge of the slave display. Therefore, the contact data of the slave display having the slave display existence data "e" is [R,e]. The slave display "e" provides the contact data to the master display, in particular the contact data receiving component.

Since, the contact data of the at least one adjacent display(s) of the slave display "d" indicate that the master display "Ms" can be positioned at the position [2,1] in the grid, the slave display "a" can be positioned at the position [2,2] in the grid, the slave display "b" can be positioned at the position [2,3] in the grid, the slave display "c" can be positioned at the position [1,3] in the grid, and the slave display "d" can be positioned at the position [0,3] in the grid, no virtual shift of the position master display "Ms", the slave display "a", slave display "b", the slave display "c", and the slave display "d" is executed (see Fig. 14f (bottom), and Sub step Sub-S10).

Fig. 14g (top) shows a repetition of the eight sub-step Sub-S8, the nineth sub-step Sub-S9, and the tenth sub-step Sub-S10 of the method for providing the position data according to Fig. 13 for the next slave display. In the eight sub-step Sub-S8, the position identification component checks, after providing the contact data of the at least one adjacent display(s) to the master display and the position data of the master display, if the slave display being the next slave display in the order has provided contact data to the master display. As can be taken from Fig. 14f and as described above, the slave display "e" has provided contact data to the master display "Ms". Therefore, the next slave display in the order has provided contact data to the master display, such that the nineth sub-step Sub-S9 and the tenth sub-step Sub-S10 follows. In the nineth sub-step Sub-S9, the position identification component triggers the second initiating component to initiate/trigger by the slave display contact identification component, subsequently in the set order, a transmitting of the contact data providing trigger instruction to the slave display "e" for instructing the slave display "e" to provide a contact data providing trigger, i.e. optical pulse, by the all of the four contact identification components to at least one adjacent slave display(s) of the slave display "e". On each edge of the slave display "e" there is disposed one of the four contact identification components. There is no display receiving the contact data providing trigger by its contact data providing trigger receiving component being arranged at the bottom edge of the slave display. The slave display having the slave display existence data "f" receives the contact data providing trigger by its contact data providing trigger receiving component being arranged at the top edge of the slave display. Therefore, the contact data of the slave display having the slave display existence data "f" is [T,f]. The slave display "f" provides the contact data to the master display, in particular the contact data receiving component. The slave display having the slave display existence data "h" receives the contact data providing trigger by its contact data providing trigger receiving component being arranged at the right edge of the slave display. Therefore, the contact data of the slave display having the slave display existence data "h" is [R,h]. The slave display "h" provides the contact data to the master display, in particular the contact data receiving component. The slave display having the slave display existence data "d" receives the contact data providing trigger by its contact data providing trigger receiving component being arranged at the left edge of the slave display. Therefore, the contact data of the slave display having the slave display existence data "d" is [L,d]. The slave display "d" provides the contact data to the master display, in particular the contact data receiving component.

Since, the contact data of the at least one adjacent slave display of the slave display "e" indicate that the master display "Ms" can be positioned at the position [2,1] in the grid, the slave display "a" can be positioned at the position [2,2] in the grid, the slave display "b" can be positioned at the position [2,3] in the grid, the slave display "c" can be positioned at the position [1,3] in the grid, the slave display "d" can be positioned at the position [0,3] in the grid, and the slave display "e" can be positioned at the position [0,2] in the grid, no virtual shift of the position master display "Ms", the slave display "a", slave display "b", the slave display "c", the slave display "d", and the slave display "e" is executed (see Fig. 14g (bottom), and Sub step Sub-S 10).

Fig. 14h (top) shows a repetition of the eight sub-step Sub-S8, the nineth sub-step Sub-S9, and the tenth sub-step Sub-S 10 of the method for providing the position data according to Fig. 13 for the next slave display. In the eight sub-step Sub-S8, the position identification component checks, after providing the contact data of the at least one adjacent display(s) to the master display and the position data of the master display, if the slave display being the next slave display in the order has provided contact data to the master display. As can be taken from Fig. 14g and as described above, the slave display "f" has provided contact data to the master display "Ms". Therefore, the next slave display in the order has provided contact data to the master display, such that the nineth sub-step Sub-S9 and the tenth sub-step Sub-S 10 follows. In the nineth sub-step Sub-S9, the position identification component triggers the second initiating component to initiate/trigger by the slave display contact identification component, subsequently in the set order, a transmitting of the contact data providing trigger instruction to the slave display "f' for instructing the slave display "f' to provide a contact data providing trigger, i.e. optical pulse, by the all of the four contact identification components to at least one adjacent slave display(s) of the slave display "f". On each edge of the slave display "f' there is disposed one of the four contact identification components. The slave display having the slave display existence data "e" receives the contact data providing trigger by its contact data providing trigger receiving component being arranged at the bottom edge of the slave display. Therefore, the contact data of the slave display having the slave display existence data "e" is [B,e]. The slave display "e" provides the contact data to the master display, in particular the contact data receiving component. The slave display having the slave display existence data "a" receives the contact data providing trigger by its contact data providing trigger receiving component being arranged at the top edge of the slave display. Therefore, the contact data of the slave display having the slave display existence data "a" is [T,a]. The slave display "a" provides the contact data to the master display, in particular the contact data receiving component. The slave display having the slave display existence data "g" receives the contact data providing trigger by its contact data providing trigger receiving component being arranged at the right edge of the slave display. Therefore, the contact data of the slave display having the slave display existence data "g" is [R,g]. The slave display "g" provides the contact data to the master display, in particular the contact data receiving component. The slave display having the slave display existence data "c" receives the contact data providing trigger by its contact data providing trigger receiving component being arranged at the left edge of the slave display. Therefore, the contact data of the slave display having the slave display existence data "c" is [L,c]. The slave display "c" provides the contact data to the master display, in particular the contact data receiving component.

Since, the contact data of the at least one adjacent slave display(s) of the slave display "f" indicate that the master display "Ms" can be positioned at the position [2,1] in the grid, the slave display "a" can be positioned at the position [2,2] in the grid, the slave display "b" can be positioned at the position [2,3] in the grid, the slave display "c" can be positioned at the position [1,3] in the grid, the slave display "d" can be positioned at the position [0,3] in the grid, the slave display "e" can be positioned at the position [0,2] in the grid, and the slave display "f" can be positioned at the position [1,2] in the grid, no virtual shift of the position master display "Ms", the slave display "a", slave display "b", the slave display "c", the slave display "d", the slave display "e", and the slave display "f" is executed (see Fig. 14h (bottom), and Sub step Sub-S10).

Fig. 14i (top) shows a repetition of the eight sub-step Sub-S8, the nineth sub-step Sub-S9, and the tenth sub-step Sub-S 10 of the method for providing the position data according to Fig. 13 for the next slave display. In the eight sub-step Sub-S8, the position identification component checks, after providing the contact data of the at least one adjacent display(s) to the master display and the position data of the master display, if the slave display being the next slave display in the order has provided contact data to the master display. As can be taken from Fig. 14h and as described above, the slave display "g" has provided contact data to the master display "Ms". Therefore, the next slave display in the order has provided contact data to the master display, such that the nineth sub-step Sub-S9 and the tenth sub-step Sub-S 10 follows. In the nineth sub-step Sub-S9, the position identification component triggers the second initiating component to initiate/trigger by the slave display contact identification component, subsequently in the set order, a transmitting of the contact data providing trigger instruction to the slave display "g" for instructing the slave display "g" to provide a contact data providing trigger, i.e. optical pulse, by the all of the four contact identification components to at least one adjacent slave display(s) of the slave display "g". On each edge of the slave display "g" there is disposed one of the four contact identification components. The slave display having the slave display existence data "h" receives the contact data providing trigger by its contact data providing trigger receiving component being arranged at the bottom edge of the slave display. Therefore, the contact data of the slave display having the slave display existence data "h" is [B,h]. The slave display "h" provides the contact data to the master display, in particular the contact data receiving component. The master display receives the contact data providing trigger by its contact data providing trigger receiving component being arranged at the top edge of the master display. Therefore, the contact data of the master is [T,Ms]. The slave display having the slave display existence data "j" receives the contact data providing trigger by its contact data providing trigger receiving component being arranged at the right edge of the slave display. Therefore, the contact data of the slave display having the slave display existence data "j" is [R,j]. The slave display "j" provides the contact data to the master display, in particular the contact data receiving component. The slave display having the slave display existence data "f' receives the contact data providing trigger by its contact data providing trigger receiving component being arranged at the left edge of the slave display. Therefore, the contact data of the slave display having the slave display existence data "f" is [L,f]. The slave display "f' provides the contact data to the master display, in particular the contact data receiving component.

Since, the contact data of the at least one adjacent slave display of the slave display "g" indicate that the master display "Ms" can be positioned at the position [2,1] in the grid, the slave display "a" can be positioned at the position [2,2] in the grid, the slave display "b" can be positioned at the position [2,3] in the grid, the slave display "c" can be positioned at the position [1,3] in the grid, the slave display "d" can be positioned at the position [0,3] in the grid, the slave display "e" can be positioned at the position [0,2] in the grid, the slave display "f" can be positioned at the position [1,2] in the grid, and the slave display "g" can be positioned at the position [1,1] in the grid, no virtual shift of the position master display "Ms", the slave display "a", slave display "b", the slave display "c", the slave display "d", the slave display "e", the slave display "f", and the slave display "g" is executed (see Fig. 14i (bottom), and Sub step Sub-S10).

Fig. 14j (top) shows a repetition of the eight sub-step Sub-S8, the nineth sub-step Sub-S9, and the tenth sub-step Sub-S10 of the method for providing the position data according to Fig. 13 for the next slave display. In the eight sub-step Sub-S8, the position identification component checks, after providing the contact data of the at least one adjacent display(s) to the master display and the position data of the master display, if the slave display being the next slave display in the order has provided contact data to the master display. As can be taken from Fig. 14i and as described above, the slave display "h" has provided contact data to the master display "Ms". Therefore, the next slave display in the order has provided contact data to the master display, such that the nineth sub-step Sub-S9 and the tenth sub-step Sub-S10 follows. In the nineth sub-step Sub-S9, the position identification component triggers the second initiating component to initiate/trigger by the slave display contact identification component, subsequently in the set order, a transmitting of the contact data providing trigger instruction to the slave display "h" for instructing the slave display "h" to provide a contact data providing trigger, i.e. optical pulse, by the all of the four contact identification components to at least one adjacent slave display(s) of the slave display "h". On each edge of the slave display "h" there is disposed one of the four contact identification components. There is no display receiving the contact data providing trigger by its contact data providing trigger receiving component being arranged at the bottom edge of the slave display. The slave display having the slave display existence data "g" receives the contact data providing trigger by its contact data providing trigger receiving component being arranged at the top edge of the slave display. Therefore, the contact data of the slave display having the slave display existence data "g" is [T,g]. The slave display "g" provides the contact data to the master display, in particular the contact data receiving component. The slave display having the slave display existence data "i" receives the contact data providing trigger by its contact data providing trigger receiving component being arranged at the right edge of the slave display. Therefore, the contact data of the slave display having the slave display existence data "i" is [R,i]. The slave display "i" provides the contact data to the master display, in particular the contact data receiving component. The slave display having the slave display existence data "e" receives the contact data providing trigger by its contact data providing trigger receiving component being arranged at the left edge of the slave display. Therefore, the contact data of the slave display having the slave display existence data "e" is [L,e]. The slave display "e" provides the contact data to the master display, in particular the contact data receiving component.

Since, the contact data of the at least one adjacent slave display of the slave display "h" indicate that the master display "Ms" can be positioned at the position [2,1] in the grid, the slave display "a" can be positioned at the position [2,2] in the grid, the slave display "b" can be positioned at the position [2,3] in the grid, the slave display "c" can be positioned at the position [1,3] in the grid, the slave display "d" can be positioned at the position [0,3] in the grid, the slave display "e" can be positioned at the position [0,2] in the grid, the slave display "f" can be positioned at the position [1,2] in the grid, the slave display "g" can be positioned at the position [1,1] in the grid, and the slave display "h" can be positioned at the position [0,1] in the grid, no virtual shift of the position master display "Ms", the slave display "a", slave display "b", the slave display "c", the slave display "d", the slave display "e", the slave display "f', the slave display "g", and the slave display "h" is executed (see Fig. 14j (bottom), and Sub step Sub-S10).

Fig. 14k (top) shows a repetition of the eight sub-step Sub-S8, the nineth sub-step Sub-S9, and the tenth sub-step Sub-S10 of the method for providing the position data according to Fig. 13 for the next slave display. In the eight sub-step Sub-S8, the position identification component checks, after providing the contact data of the at least one adjacent display(s) to the master display and the position data of the master display, if the slave display being the next slave display in the order has provided contact data to the master display. As can be taken from Fig. 14j and as described above, the slave display "i" has provided contact data to the master display "Ms". Therefore, the next slave display in the order has provided contact data to the master display, such that the nineth sub-step Sub-S9 and the tenth sub-step Sub-S10 follows. In the nineth sub-step Sub-S9, the position identification component triggers the second initiating component to initiate/trigger by the slave display contact identification component, subsequently in the set order, a transmitting of the contact data providing trigger instruction to the slave display "i" for instructing the slave display "i" to provide a contact data providing trigger, i.e. optical pulse, by the all of the four contact identification components to at least one adjacent slave display(s) of the slave display "i". On each edge of the slave display "i" there is disposed one of the four contact identification components. There is no display receiving the contact data providing trigger by its contact data providing trigger receiving component being arranged at the bottom edge of the slave display. The slave display having the slave display existence data "j" receives the contact data providing trigger by its contact data providing trigger receiving component being arranged at the top edge of the slave display. Therefore, the contact data of the slave display having the slave display existence data "j" is [T,j]. The slave display "j" provides the contact data to the master display, in particular the contact data receiving component. There is no slave display receiving the contact data providing trigger by its contact data providing trigger receiving component being arranged at the right edge of the slave display. The slave display having the slave display existence data "h" receives the contact data providing trigger by its contact data providing trigger receiving component being arranged at the left edge of the slave display. Therefore, the contact data of the slave display having the slave display existence data "h" is [L,h]. The slave display "h" provides the contact data to the master display, in particular the contact data receiving component.

Since, the contact data of the at least one adjacent slave display of the slave display "i" indicate that the master display "Ms" can be positioned at the position [2,1] in the grid, the slave display "a" can be positioned at the position [2,2] in the grid, the slave display "b" can be positioned at the position [2,3] in the grid, the slave display "c" can be positioned at the position [1,3] in the grid, the slave display "d" can be positioned at the position [0,3] in the grid, the slave display "e" can be positioned at the position [0,2] in the grid, the slave display "f" can be positioned at the position [1,2] in the grid, the slave display "g" can be positioned at the position [1,1] in the grid, the slave display "h" can be positioned at the position [0,1] in the grid, and the slave display "i" can be positioned at the position [0,0] in the grid, no virtual shift of the position master display "Ms", the slave display "a", slave display "b", the slave display "c", the slave display "d", the slave display "e", the slave display "f", the slave display "g", the slave display "h", and the slave display "i" is executed (see Fig. 14k (bottom), and Sub step Sub-S10).

Fig. 14l (top) shows a repetition of the eight sub-step Sub-S8, the nineth sub-step Sub-S9, and the tenth sub-step Sub-S10 of the method for providing the position data according to Fig. 13 for the next slave display. In the eight sub-step Sub-S8, the position identification component checks, after providing the contact data of the at least one adjacent display(s) to the master display and the position data of the master display, if the slave display being the next slave display in the order has provided contact data to the master display. As can be taken from Fig. 14k and as described above, the slave display "j" has provided contact data to the master display "Ms". Therefore, the next slave display in the order has provided contact data to the master display, such that the nineth sub-step Sub-S9 and the tenth sub-step Sub-S10 follows. In the nineth sub-step Sub-S9, the position identification component triggers the second initiating component to initiate/trigger by the slave display contact identification component, subsequently in the set order, a transmitting of the contact data providing trigger instruction to the slave display "j" for instructing the slave display "j" to provide a contact data providing trigger, i.e. optical pulse, by the all of the four contact identification components to at least one adjacent slave display(s) of the slave display "j". On each edge of the slave display "j" there is disposed one of the four contact identification components. The slave display having the slave display existence data "i" receives the contact data providing trigger by its contact data providing trigger receiving component being arranged at the bottom edge of the slave display. Therefore, the contact data of the slave display having the slave display existence data "j" is [B,i]. The slave display "j" provides the contact data to the master display, in particular the contact data receiving component. The slave display having the slave display existence data "k" receives the contact data providing trigger by its contact data providing trigger receiving component being arranged at the top edge of the slave display. Therefore, the contact data of the slave display having the slave display existence data "k" is [T,k]. The slave display "k" provides the contact data to the master display, in particular the contact data receiving component. There is no slave display receiving the contact data providing trigger by its contact data providing trigger receiving component being arranged at the right edge of the slave display. The slave display having the slave display existence data "g" receives the contact data providing trigger by its contact data providing trigger receiving component being arranged at the left edge of the slave display. Therefore, the contact data of the slave display having the slave display existence data "g" is [L,g]. The slave display "g" provides the contact data to the master display, in particular the contact data receiving component.

Since, the contact data of the at least one adjacent slave display of the slave display "j" indicate that the master display "Ms" can be positioned at the position [2,1] in the grid, the slave display "a" can be positioned at the position [2,2] in the grid, the slave display "b" can be positioned at the position [2,3] in the grid, the slave display "c" can be positioned at the position [1,3] in the grid, the slave display "d" can be positioned at the position [0,3] in the grid, the slave display "e" can be positioned at the position [0,2] in the grid, the slave display "f" can be positioned at the position [1,2] in the grid, the slave display "g" can be positioned at the position [1,1] in the grid, the slave display "h" can be positioned at the position [0,1] in the grid, the slave display "i" can be positioned at the position [0,0] in the grid, and the slave display "j" can be positioned at the position [1,0] in the grid, no virtual shift of the position master display "Ms", the slave display "a", slave display "b", the slave display "c", the slave display "d", the slave display "e", the slave display "f", the slave display "g", the slave display "h", the slave display "i", and the slave display "j" is executed (see Fig. 14l (bottom), and Sub step Sub-S10).

Fig. 14m (top) shows a repetition of the eight sub-step Sub-S8, the nineth sub-step Sub-S9, and the tenth sub-step Sub-S10 of the method for providing the position data according to Fig. 13 for the next slave display. In the eight sub-step Sub-S8, the position identification component checks, after providing the contact data of the at least one adjacent display(s) to the master display and the position data of the master display, if the slave display being the next slave display in the order has provided contact data to the master display. As can be taken from Fig. 14l and as described above, the slave display "k" has provided contact data to the master display "Ms". Therefore, the next slave display in the order has provided contact data to the master display, such that the nineth sub-step Sub-S9 and the tenth sub-step Sub-S10 follows. In the nineth sub-step Sub-S9, the position identification component triggers the second initiating component to initiate/trigger by the slave display contact identification component, subsequently in the set order, a transmitting of the contact data providing trigger instruction to the slave display "k" for instructing the slave display "k" to provide a contact data providing trigger, i.e. optical pulse, by the all of the four contact identification components to at least one adjacent slave display(s) of the slave display "k". On each edge of the slave display "k" there is disposed one of the four contact identification components. The slave display having the slave display existence data "j" receives the contact data providing trigger by its contact data providing trigger receiving component being arranged at the bottom edge of the slave display. Therefore, the contact data of the slave display having the slave display existence data "j" is [B,j]. The slave display "j" provides the contact data to the master display, in particular the contact data receiving component. The slave display having the slave display existence data "l" receives the contact data providing trigger by its contact data providing trigger receiving component being arranged at the top edge of the slave display. Therefore, the contact data of the slave display having the slave display existence data "l" is [l,f]. The slave display "l" provides the contact data to the master display, in particular the contact data receiving component. There is no slave display receiving the contact data providing trigger by its contact data providing trigger receiving component being arranged at the right edge of the slave display. The master display receives the contact data providing trigger by its contact data providing trigger receiving component being arranged at the left edge of the master display. Therefore, the contact data of the master display is [L,Ms].

Since, the contact data of the at least one adjacent slave display of the slave "k" indicate that the master display "Ms" can be positioned at the position [2,1] in the grid, the slave display "a" can be positioned at the position [2,2] in the grid, the slave display "b" can be positioned at the position [2,3] in the grid, the slave display "c" can be positioned at the position [1,3] in the grid, the slave display "d" can be positioned at the position [0,3] in the grid, the slave display "e" can be positioned at the position [0,2] in the grid, the slave display "f" can be positioned at the position [1,2] in the grid, the slave display "g" can be positioned at the position [1,1] in the grid, the slave display "h" can be positioned at the position [0,1] in the grid, the slave display "i" can be positioned at the position [0,0] in the grid, the slave display "j" can be positioned at the position [1,0] in the grid, and the slave display "k" can be positioned at the position [2,0] in the grid, no virtual shift of the position master display "Ms", the slave display "a", slave display "b", the slave display "c", the slave display "d", the slave display "e", the slave display "f", the slave display "g", the slave display "h", the slave display "i", the slave display "j", and the slave display "k" is executed (see Fig. 14m (bottom), and Sub step Sub-S10).

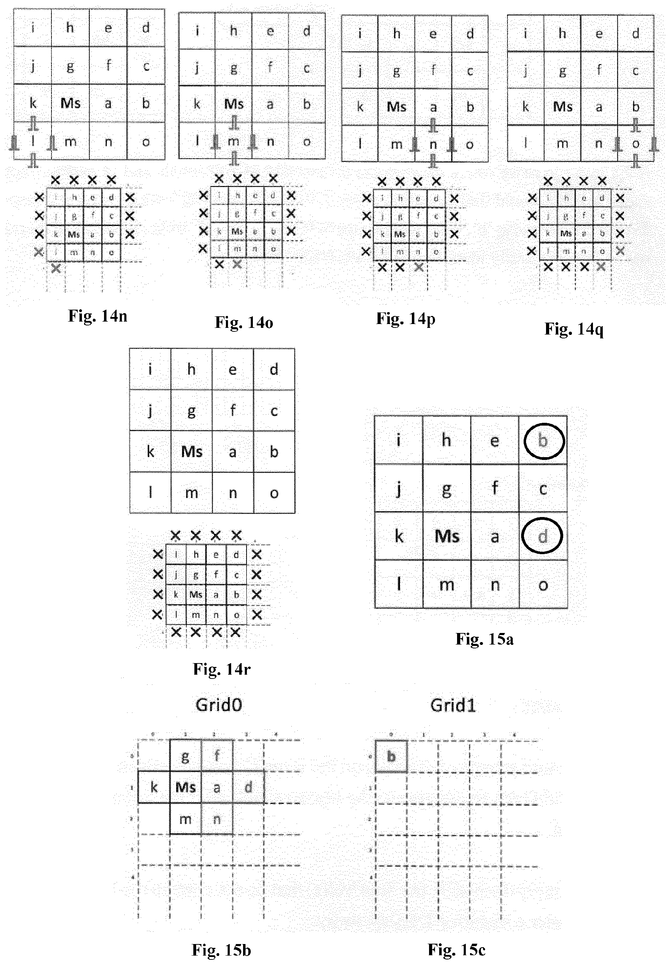

Fig. 14n (top) shows a repetition of the eight sub-step Sub-S8, the nineth sub-step Sub-S9, and the tenth sub-step Sub-S10 of the method for providing the position data according to Fig. 13 for the next slave display. In the eight sub-step Sub-S8, the position identification component checks, after providing the contact data of the at least one adjacent display(s) to the master display and the position data of the master display, if the slave display being the next slave display in the order has provided contact data to the master display. As can be taken from Fig. 14m and as described above, the slave display "l" has provided contact data to the master display "Ms". Therefore, the next slave display in the order has provided contact data to the master display, such that the nineth sub-step Sub-S9 and the tenth sub-step Sub-S10 follows. In the nineth sub-step Sub-S9, the position identification component triggers the second initiating component to initiate/trigger by the slave display contact identification component, subsequently in the set order, a transmitting of the contact data providing trigger instruction to the slave display "l" for instructing the slave display "l" to provide a contact data providing trigger, i.e. optical pulse, by the all of the four contact identification components to at least one adjacent slave display(s) of the slave display "l". On each edge of the slave display "l" there is disposed one of the four contact identification components. The slave display having the slave display existence data "k" receives the contact data providing trigger by its contact data providing trigger receiving component being arranged at the bottom edge of the slave display. Therefore, the contact data of the slave display having the slave display existence data "k" is [B,k]. The slave display "k" provides the contact data to the master display, in particular the contact data receiving component. There is no slave display receiving the contact data providing trigger by its contact data providing trigger receiving component being arranged at the top edge of the slave display. There is no slave display receiving the contact data providing trigger by its contact data providing trigger receiving component being arranged at the right edge of the slave display. The slave display having the slave display existence data "m" receives the contact data providing trigger by its contact data providing trigger receiving component being arranged at the left edge of the slave display. Therefore, the contact data of the slave display having the slave display existence data "m" is [L,m]. The slave display "m" provides the contact data to the master display, in particular the contact data receiving component.

Since, the contact data of the at least one adjacent slave display of the slave "l" indicate that the master display "Ms" can be positioned at the position [2,1] in the grid, the slave display "a" can be positioned at the position [2,2] in the grid, the slave display "b" can be positioned at the position [2,3] in the grid, the slave display "c" can be positioned at the position [1,3] in the grid, the slave display "d" can be positioned at the position [0,3] in the grid, the slave display "e" can be positioned at the position [0,2] in the grid, the slave display "f" can be positioned at the position [1,2] in the grid, the slave display "g" can be positioned at the position [1,1] in the grid, the slave display "h" can be positioned at the position [0,1] in the grid, the slave display "i" can be positioned at the position [0,0] in the grid, the slave display "j" can be positioned at the position [1,0] in the grid, the slave display "k" can be positioned at the position [2,0] in the grid, and the slave display "l" can be positioned at the position [3,0] in the grid, no virtual shift of the position master display "Ms", the slave display "a", slave display "b", the slave display "c", the slave display "d", the slave display "e", the slave display "f", the slave display "g", the slave display "h", the slave display "i", the slave display "j", the slave display "k", and the slave display "l" is executed (see Fig. 14n (bottom), and Sub step Sub-S10).

Fig. 14o (top) shows a repetition of the eight sub-step Sub-S8, the nineth sub-step Sub-S9, and the tenth sub-step Sub-S10 of the method for providing the position data according to Fig. 13 for the next slave display. In the eight sub-step Sub-S8, the position identification component checks, after providing the contact data of the at least one adjacent display(s) to the master display and the position data of the master display, if the slave display being the next slave display in the order has provided contact data to the master display. As can be taken from Fig. 14n and as described above, the slave display "m" has provided contact data to the master display "Ms". Therefore, the next slave display in the order has provided contact data to the master display, such that the nineth sub-step Sub-S9 and the tenth sub-step Sub-S10 follows. In the nineth sub-step Sub-S9, the position identification component triggers the second initiating component to initiate/trigger by the slave display contact identification component, subsequently in the set order, a transmitting of the contact data providing trigger instruction to the slave display "m" for instructing the slave display "m" to provide a contact data providing trigger, i.e. optical pulse, by the all of the four contact identification components to at least one adjacent slave display(s) of the slave display "m". On each edge of the slave display "m" there is disposed one of the four contact identification components. The master display receives the contact data providing trigger by its contact data providing trigger receiving component being arranged at the bottom edge of the slave display. Therefore, the master data of the slave display is [B,Ms]. There is no slave display receiving the contact data providing trigger by its contact data providing trigger receiving component being arranged at the top edge of the slave display. The slave display having the slave display existence data "l" receives the contact data providing trigger by its contact data providing trigger receiving component being arranged at the right edge of the slave display. Therefore, the contact data of the slave display having the slave display existence data "l" is [R,l]. The slave display "l" provides the contact data to the master display, in particular the contact data receiving component. The slave display having the slave display existence data "n" receives the contact data providing trigger by its contact data providing trigger receiving component being arranged at the left edge of the slave display. Therefore, the contact data of the slave display having the slave display existence data "n" is [L,n]. The slave display "n" provides the contact data to the master display, in particular the contact data receiving component.

Since, the contact data of the at least one adjacent slave display of the slave display "m" indicate that the master display "Ms" can be positioned at the position [2,1] in the grid, the slave display "a" can be positioned at the position [2,2] in the grid, the slave display "b" can be positioned at the position [2,3] in the grid, the slave display "c" can be positioned at the position [1,3] in the grid, the slave display "d" can be positioned at the position [0,3] in the grid, the slave display "e" can be positioned at the position [0,2] in the grid, the slave display "f" can be positioned at the position [1,2] in the grid, the slave display "g" can be positioned at the position [1,1] in the grid, the slave display "h" can be positioned at the position [0,1] in the grid, the slave display "i" can be positioned at the position [0,0] in the grid, the slave display "j" can be positioned at the position [1,0] in the grid, the slave display "k" can be positioned at the position [2,0] in the grid, the slave display "l" can be positioned at the position [3,0] in the grid, and the slave display "m" can be positioned at the position [3,1] in the grid, no virtual shift of the position master display "Ms", the slave display "a", slave display "b", the slave display "c", the slave display "d", the slave display "e", the slave display "f", the slave display "g", the slave display "h", the slave display "i", the slave display "j", the slave display "k", the slave display "l", and the slave display "m" is executed (see Fig. 14o (bottom), and Sub step Sub-S10).

Fig. 14p (top) shows a repetition of the eight sub-step Sub-S8, the nineth sub-step Sub-S9, and the tenth sub-step Sub-S10 of the method for providing the position data according to Fig. 13 for the next slave display. In the eight sub-step Sub-S8, the position identification component checks, after providing the contact data of the at least one adjacent display(s) to the master display and the position data of the master display, if the slave display being the next slave display in the order has provided contact data to the master display. As can be taken from Fig. 14o and as described above, the slave display "n" has provided contact data to the master display "Ms". Therefore, the next slave display in the order has provided contact data to the master display, such that the nineth sub-step Sub-S9 and the tenth sub-step Sub-S10 follows. In the nineth sub-step Sub-S9, the position identification component triggers the second initiating component to initiate/trigger by the slave display contact identification component, subsequently in the set order, a transmitting of the contact data providing trigger instruction to the slave display "n" for instructing the slave display "n" to provide a contact data providing trigger, i.e. optical pulse, by the all of the four contact identification components to at least one adjacent slave display(s) of the slave display "n". On each edge of the slave display "n" there is disposed one of the four contact identification components. The slave display having the slave display existence data "a" receives the contact data providing trigger by its contact data providing trigger receiving component being arranged at the bottom edge of the slave display. Therefore, the contact data of the slave display having the slave display existence data "a" is [B,a]. The slave display "a" provides the contact data to the master display, in particular the contact data receiving component. There is no slave display receiving the contact data providing trigger by its contact data providing trigger receiving component being arranged at the top edge of the slave display. The slave display having the slave display existence data "m" receives the contact data providing trigger by its contact data providing trigger receiving component being arranged at the right edge of the slave display. Therefore, the contact data of the slave display having the slave display existence data "m" is [R,m]. The slave display "m" provides the contact data to the master display, in particular the contact data receiving component. The slave display having the slave display existence data "o" receives the contact data providing trigger by its contact data providing trigger receiving component being arranged at the left edge of the slave display. Therefore, the contact data of the slave display having the slave display existence data "o" is [L,o]. The slave display "o" provides the contact data to the master display, in particular the contact data receiving component.

Since, the contact data of the at least one adjacent slave display of the slave display "n" indicate that the master display "Ms" can be positioned at the position [2,1] in the grid, the slave display "a" can be positioned at the position [2,2] in the grid, the slave display "b" can be positioned at the position [2,3] in the grid, the slave display "c" can be positioned at the position [1,3] in the grid, the slave display "d" can be positioned at the position [0,3] in the grid, the slave display "e" can be positioned at the position [0,2] in the grid, the slave display "f" can be positioned at the position [1,2] in the grid, the slave display "g" can be positioned at the position [1,1] in the grid, the slave display "h" can be positioned at the position [0,1] in the grid, the slave display "i" can be positioned at the position [0,0] in the grid, the slave display "j" can be positioned at the position [1,0] in the grid, the slave display "k" can be positioned at the position [2,0] in the grid, the slave display "l" can be positioned at the position [3,0] in the grid, the slave display "m" can be positioned at the position [3,1] in the grid, and the slave display "n" can be positioned at the position [3,2] in the grid, no virtual shift of the position master display "Ms", the slave display "a", slave display "b", the slave display "c", the slave display "d", the slave display "e", the slave display "f", the slave display "g", the slave display "h", the slave display "i", the slave display "j", the slave display "k", the slave display "l", the slave display "m", and the slave display "n" is executed (see Fig. 14p (bottom), and Sub step Sub-S10).

Fig. 14q (top) shows a repetition of the eight sub-step Sub-S8, the nineth sub-step Sub-S9, and the tenth sub-step Sub-S10 of the method for providing the position data according to Fig. 13 for the next slave display. In the eight sub-step Sub-S8, the position identification component checks, after providing the contact data of the at least one adjacent display(s) to the master display and the position data of the master display, if the slave display being the next slave display in the order has provided contact data to the master display. As can be taken from Fig. 14f and as described above, the slave display "o" has provided contact data to the master display "Ms". Therefore, the next slave display in the order has provided contact data to the master display, such that the nineth sub-step Sub-S9 and the tenth sub-step Sub-S10 follows. In the nineth sub-step Sub-S9, the position identification component triggers the second initiating component to initiate/trigger by the slave display contact identification component, subsequently in the set order, a transmitting of the contact data providing trigger instruction to the slave display "o" for instructing the slave display "o" to provide a contact data providing trigger, i.e. optical pulse, by the all of the four contact identification components to at least one adjacent slave display(s) of the slave display "o". On each edge of the slave display "o" there is disposed one of the four contact identification components. The slave display having the slave display existence data "b" receives the contact data providing trigger by its contact data providing trigger receiving component being arranged at the bottom edge of the slave display. Therefore, the contact data of the slave display having the slave display existence data "b" is [B,b]. The slave display "b" provides the contact data to the master display, in particular the contact data receiving component. There is no slave display receiving the contact data providing trigger by its contact data providing trigger receiving component being arranged at the top edge of the slave display. The slave display having the slave display existence data "n" receives the contact data providing trigger by its contact data providing trigger receiving component being arranged at the right edge of the slave display. Therefore, the contact data of the slave display having the slave display existence data "n" is [R,n]. The slave display "n" provides the contact data to the master display, in particular the contact data receiving component. There is no slave display receiving the contact data providing trigger by its contact data providing trigger receiving component being arranged at the left edge of the slave display.

Since, the contact data of the at least one adjacent slave display of the slave "o" indicate that the master display "Ms" can be positioned at the position [2,1] in the grid, the slave display "a" can be positioned at the position [2,2] in the grid, the slave display "b" can be positioned at the position [2,3] in the grid, the slave display "c" can be positioned at the position [1,3] in the grid, the slave display "d" can be positioned at the position [0,3] in the grid, the slave display "e" can be positioned at the position [0,2] in the grid, the slave display "f" can be positioned at the position [1,2] in the grid, the slave display "g" can be positioned at the position [1,1] in the grid, the slave display "h" can be positioned at the position [0,1] in the grid, the slave display "i" can be positioned at the position [0,0] in the grid, the slave display "j" can be positioned at the position [1,0] in the grid, the slave display "k" can be positioned at the position [2,0] in the grid, the slave display "l" can be positioned at the position [3,0] in the grid, the slave display "m" can be positioned at the position [3,1] in the grid, the slave display "n" can be positioned at the position [3,2] in the grid, and the slave display "o" can be positioned at the position [3,3] in the grid, no virtual shift of the position master display "Ms", the slave display "a", slave display "b", the slave display "c", the slave display "d", the slave display "e", the slave display "f", the slave display "g", the slave display "h", the slave display "i", the slave display "j", the slave display "k", the slave display "l", the slave display "m", the slave display "n", and the slave display "o" is executed (see Fig. 14q (bottom), and Sub step Sub-S10).

Fig. 14r shows the final form of the large screen display being configured/provided by the method as described above in a detailed manner. The final position data of the master display "Ms" is the position [2,1] in the grid, of the slave display "a" is the position [2,2] in the grid, of the slave display "b" is the position [2,3] in the grid, of the slave display "c" is the position [1,3] in the grid, of the slave display "d" is the position [0,3] in the grid, of the slave display "e" is the position [0,2] in the grid, of the slave display "f" is the position [1,2] in the grid, of the slave display "g" is the position [1,1] in the grid, of the slave display "h" is the position [0,1] in the grid, of the slave display "i" is the position [0,0] in the grid, of the slave display "j" is the position [1,0] in the grid, of the slave display "k" is the position [2,0] in the grid, of the slave display "l" is the position [3,0] in the grid, of the slave display "m" is the position [3,1] in the grid, of the slave display "n" is the position [3,2] in the grid, and of the slave display "o" is the position [3,3] in the grid.

Figs. 15a to 15g shows respectively illustrates another exemplary embodiment of the method for providing the position data according to Fig. 13.

Fig. 15a shows that the large screen display comprises a master display and fifteen slave displays. In a first sub-step Sub-S1 before executing the third sub-step Sub-S3 and the fourth sub-step Sub-S4 as mentioned above, the order of the received slave display existence data of each one of the slave displays was set based on which one of the slave display existence data was received first and which slave display existence data was received later. The order of the fifteen slave displays was set to "a to o", wherein "a to o" represents the slave display existence data of each one of the slave displays. Therefore, the slave display having the slave display existence data "a" was the slave display which provides first the slave display existence data respectively whose slave display existence data were received first. In this context, the order position of the slave display having the slave display existence data "d" and the slave display having the slave display existence data "d" is switched. The effect of this switching is described in the following Figs. and paragraphs.

Fig. 15b shows the same status as depicted in Fig. 14c. Therefore, the executed steps as described in Figs. 14a, 14b, and 14c are already executed before the status of Fig. 15b. For a better overview and connection to the further proceeding, the description of Fig. 14c is almost fully repeated. Fig. 14c (top) shows the fifth sub-step Sub-S5, the sixth sub-step Sub-S6, and the seventh sub-step Sub-S7 of the method for providing the position data according to Fig. 13. In the fifth sub-step Sub-S5, the position identification component checks, after providing the contact data of the at least one adjacent display(s) to the master display and the position data of the master display, if the slave display being the first slave display in the order has provided contact data to the master display. As can be taken from Fig. 14b and as described above, the slave display "a" has provided contact data to the master display 10. Therefore, the first slave display in the order has provided contact data to the master display, such that the sixth sub-step Sub-S6 and a seventh sub-step Sub-S7 follows. In the sixth sub-step Sub-S6, the position identification component triggers the second initiating component to initiate/trigger by the slave display contact identification component, subsequently in the set order, a transmitting of the contact data providing trigger instruction to the slave display "a" for instructing the slave display "a" to provide a contact data providing trigger, i.e. optical pulse, by the all of the four contact identification components to at least one adjacent slave display(s) of the slave display "a". On each edge of the slave display "a" there is disposed one of the four contact identification components. The slave display having the slave display existence data "f" receives the contact data providing trigger by its contact data providing trigger receiving component being arranged at the bottom edge of the slave display. Therefore, the contact data of the slave display having the slave display existence data "f" is [B,f]. The slave display "f" provides the contact data to the master display, in particular the contact data receiving component. The slave display having the slave display existence data "n" receives the contact data providing trigger by its contact data providing trigger receiving component being arranged at the top edge of the slave display. Therefore, the contact data of the slave display having the slave display existence data "n" is [T,n]. The slave display "n" provides the contact data to the master display, in particular the contact data receiving component. The master display "Ms" receives the contact data providing trigger by its contact data providing trigger receiving component being arranged at the right edge of the master display. Therefore, the contact data of the master display "Ms" is [R,Ms]. The slave display having the slave display existence data "b" receives the contact data providing trigger by its contact data providing trigger receiving component being arranged at the left edge of the slave display. Therefore, the contact data of the slave display having the slave display existence data "b" is [L,b]. The slave display "b" provides the contact data to the master display, in particular the contact data receiving component.

Since, the contact data of the at least one adjacent slave display of the slave display "a" indicate that the master display "Ms" can be positioned at the position [1,1] in the grid and the slave display "a" can be positioned at the position [1,2] in the grid, no virtual shift of the position master display "Ms" and the slave display "a" is executed (see Fig. 14c (bottom), and Sub step Sub-S7).

Fig. 15c shows the eight sub-step Sub-S8 and the eleventh sub-step Sub-S 11 of the method for providing the position data according to Fig. 13. In the eight sub-step Sub-S8, the position identification component checks, after providing the contact data of the at least one adjacent slave display(s) to the master display and the position data of the slave display "a", if the slave display being the next slave display in the order has provided contact data to the master display. As can be taken from Fig. 15b and as described above, the slave display "b" has not provided contact data to the master display. Therefore, the next slave display in the order has not provided contact data to the master display, such that the eleventh sub-step Sub-S11, the twelfth sub-step Sub-S12, the thirteenth sub-step Sub-S13, and the fourteenth sub-step Sub-S14 follows. In the eleventh sub-step Sub-S 11, the slave display "b" is virtually shifted to a corner of another virtual grid grid!. Therefore, the slave display "b" has the position [0;0] in the grid1. The grid1 is separate to the grid0. In the time, when the method executes sub-steps in the grid1, the grid0 remains unchanged until both grids are merged together.

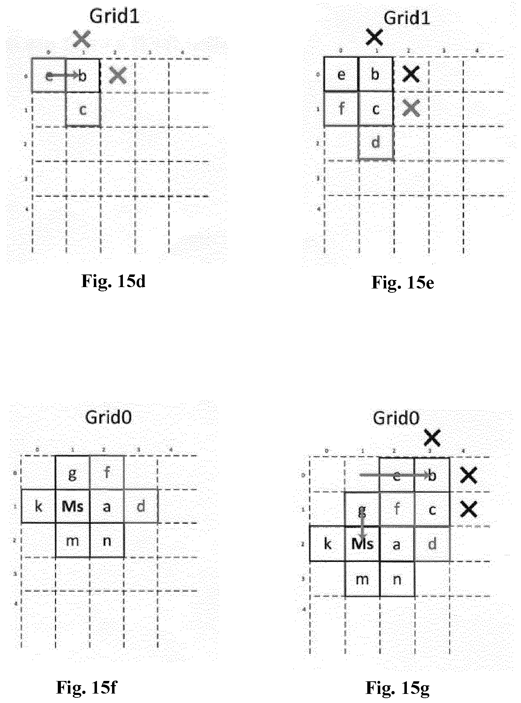

Fig. 15d shows the twelfth sub-step Sub-S 12 and the thirteenth sub-step Sub-S 13 of the method for providing the position data according to Fig. 13. In a twelfth sub-step Sub-S12, the position identification component triggers the second initiating component to initiate/trigger by the slave display contact identification component, subsequently in the set order, a transmitting of the contact data providing trigger instruction to slave display "b" in the order for instructing the slave display "b" in the order to provide a contact data providing trigger to at least one adjacent slave display(s) of the slave display "b". Further, in the twelfth sub-step Sub-S12, the position identification component triggers the second initiating component to initiate/trigger a receiving of the contact data of the at least one adjacent slave display(s) of the slave display "b" in the order to the master display. There is no slave display receiving the contact data providing trigger by its contact data providing trigger receiving component being arranged at the bottom edge of the slave display. The slave display having the slave display existence data "c" receives the contact data providing trigger by its contact data providing trigger receiving component being arranged at the top edge of the slave display. Therefore, the contact data of the slave display having the slave display existence data "c" is [T,c]. The slave display "c" provides the contact data to the master display, in particular the contact data receiving component. There is no slave display receiving the contact data providing trigger by its contact data providing trigger receiving component being arranged at the left edge of the slave display. The slave display having the slave display existence data "e" receives the contact data providing trigger by its contact data providing trigger receiving component being arranged at the rigth edge of the slave display. Therefore, the contact data of the slave display having the slave display existence data "e" is [R,e]. The slave display "e" provides the contact data to the master display, in particular the contact data receiving component.

Since, the contact data of the at least one adjacent slave display(s) of the slave display "b" indicate that the slave display "b" cannot be positioned at the position [0,0] in the grid1, because there is a contact on the left edge to slave display "b", the slave display "b" is virtually shifted to the position [0,1] in the grid1 (see Fig. 15d (bottom), and Sub step Sub-S13).

Fig. 15e shows the fourteenth sub-step Sub-S14, the fifteenth sub-step Sub-S15, and the sixteenth sub-step Sub-S16 of the method for providing the position data according to Fig. 13. In the fourteenth sub-step Sub-S 14, the position identification component checks, after providing the contact data of the at least one adjacent slave display(s) and the position data of the slave display "b", if the slave display being the next slave display in the order has provided contact data to the master display and checks the grid and the at least one other grid if there are any similarities, in particular similarities in the contact data of displays in the grid and in the at least one other grid. As can be taken from Fig. 15d and as described above, the slave display "c" has provided contact data to the master display and no similarity is identified. Therefore, the next slave display in the order has provided contact data to the master display, such that the fifteenth sub-step Sub-S15, and the sixteenth sub-step Sob-S16 follows. In the fifteenth sub-step Sub-S15, the position identification component triggers the second initiating component to initiate/trigger a receiving of the contact data of the at least one adjacent slave display(s) of the slave display "c" being next in the order to the master display. The slave display having the slave display existence data "b" receives the contact data providing trigger by its contact data providing trigger receiving component being arranged at the bottom edge of the slave display. Therefore, the contact data of the slave display having the slave display existence data "b" is [B,b]. The slave display "b" provides the contact data to the master display, in particular the contact data receiving component. The slave display having the slave display existence data "d" receives the contact data providing trigger by its contact data providing trigger receiving component being arranged at the top edge of the slave display. Therefore, the contact data of the slave display having the slave display existence data "d" is [T,d]. The slave display "d" provides the contact data to the master display, in particular the contact data receiving component. There is no slave display receiving the contact data providing trigger by its contact data providing trigger receiving component being arranged at the left edge of the slave display. The slave display having the slave display existence data "f' receives the contact data providing trigger by its contact data providing trigger receiving component being arranged at the right edge of the slave display. Therefore, the contact data of the slave display having the slave display existence data "f" is [R,f]. The slave display "f' provides the contact data to the master display, in particular the contact data receiving component.

Since, the contact data of the at least one adjacent slave display(s) of the slave "c" indicate that the slave display "b" can be positioned at the position [0,1] in the grid1 and the slave display "c" can be positioned at the position [1,1] in the grid1, no virtual shift of the position master display "b" and the slave display "c" is executed (see Fig. 15e, and Sub step Sub-S16).

Figs 15f and 15g shows the merging of grid0 and grid1 by the fourteenth sub-step Sub-S14 of the method for providing the position data according to Fig. 13. In the fourteenth sub-step Sub-S 14, the position identification component checks, after providing the contact data of at least one adjacent slave display(s) and the position data of the slave display "c", if the slave display being the next slave display in the order has provided contact data to the master display and checks the grid and the at least one other grid if there are any similarities, in particular similarities in the contact data of displays in the grid and in the at least one other grid. As can be taken from Figs. 15f and 15e, in both grids grid0 and grid 1 slave displays, in particular the slave display "a" and the slave display "c", respectively, have identified that the slave display "f' and the slave display "d" are in contact to them. Based on this identified common contacts respectively similarity, the position data and contact data derived in grid1 are included into the derived/provided position data and contact data of grid0 (see Fig. 15g). Based on the included position data and contact data of the grid 1, the sixteenth sub-step Sub-S16 is executed, such that displays in grid0 are virtually shifted to another position, when the position data and the contact data of the displays of the grid0 have to be in a different position based on the position data and the contact data of the grid 1. After the merging, the fifth sub step Sub-S5 is executed.

This proceeding may be repeated until the position identification component has received and considered each one of the slave displays being included in the order, until the next slave display in the order is not in/included the contact data of the previous first/next slave display and/or until the contact data of the next slave display comprises the slave display existence data of an already considered slave display and/or the master display (depicted in Fig. 13 as Sub-S#). In other words, in the last case, the other grid is merged to the first grid in order to merge both grids.

The foregoing hardware of the embodiments of the disclosure may be following devices. The external host or the image providing device may be a laptop, a computer, a smart phone, video player or a computing pad which can provide image data to the master display 10 and at least one slave display 20. The master display 10 and the slave display 20, for example, are Quantum dot LED (QLED) display device, OLED display device, LED display device or LCD display device. In an embodiment, the master display 10 and the slave display 20 are the same display device. The image data receiving component 11, 21 may be a circuit, an integrated circuit, a chip or a set of chips of HDMI interface, a circuit, an integrated circuit, a chip or a set of chips of RS232 interface or a circuit, an integrated circuit, a chip or a set of chips of USB interface.

In an embodiment, the image data receiving component 11 of the master display 10 may communicatively coupled with the external host by a wireless manner. The image data receiving component 11 may be a circuit, an integrated circuit, a chip or a set of chips of wireless interface, for example, which is WIFI interface. The image data providing component 18 and 31 may be a circuit, an integrated circuit, a chip or a set of chips of one of the HDMI interface, USB interface and RS232 interface but is not limited thereto.

In an embodiment, the slave display existence identification component 12 may be a circuit, an integrated circuit, a chip or a set of chips. The slave display existence request providing sub-component 121 may be a circuit, an integrated circuit, a chip or a set of chips. The slave display existence data receiving sub-component 122 may be a circuit, an integrated circuit, a chip or a set of chips. Alternatively, the slave display existence identification component 12, the slave display existence request providing sub-component 121 or the slave display existence data receiving sub-component 122 may respectively be software.

The contact data providing trigger generating sub-component 131 may be a circuit, an integrated circuit, a chip or a set of chips. A contact data providing trigger transmitting sub-component 132 may be a circuit, an integrated circuit, a chip or a set of chips. Alternatively, the master display contact identification component 13, a contact data providing trigger generating sub-component 131 or a contact data providing trigger transmitting sub-component 132 may respectively be software.

The slave display contact identification component 14 may be a circuit, an integrated circuit, a chip or a set of chips. The contact data providing trigger instruction generating sub-component 141 may be a circuit, an integrated circuit, a chip or a set of chips. The contact data providing trigger instruction transmitting sub-component 142 may be a circuit, an integrated circuit, a chip or a set of chips. The contact data providing trigger generating sub-component143 may be a circuit, an integrated circuit, a chip or a set of chips. Alternatively, the slave display contact identification component 14, contact data providing trigger instruction generating sub-component 141, the contact data providing trigger instruction transmitting sub-component 142 or contact data providing trigger generating sub-component143 may respectively be software. The contact data receiving component 15 may be a circuit, an integrated circuit, a chip, a set of chips or software.

The control system component 16, 30 includes at least one processor. The processor may be a central processing unit (CPU) or microprocessor having image data processing and computation functions, and/or other programmable general-purpose or special-purpose microprocessor, a digital signal processor (DSP), an image processing unit (IPU), a graphics processing unit (GPU), a programmable controller, an application specific integrated circuit (ASIC), a programmable logic device (PLD), Field Programmable Gate Array (FPGA), an image processor, other similar processing devices or a combination of these devices. The order setting component 161, a position identification component 164 or a processing component 165 may respectively be a circuit, an integrated circuit, a chip or a set of chips. Alternatively, the order setting component 161, a position identification component 164 or a processing component 165 may respectively be software but is not limited thereto. The processing sub-component 301 may be a circuit, an integrated circuit, a chip or a set of chips.

The display element 17, 29 may be a QLED panel, OLED panel, LED panel, micro LED panel or LCD panel but is not limited thereto. The abovementioned data memory, for example, comprises any type of fixed or removable random access memory (RAM), read-only memory (ROM), flash memory, hard disk drive (HDD), solid state drive (SSD), similar elements, or a combination of the above elements.

In an embodiment, the slave display existence request receiving component 22 may be a circuit, an integrated circuit, a chip or a set of chips. The slave display existence data providing component 23 may be a circuit, an integrated circuit, a chip or a set of chips. The contact data providing trigger receiving component 24 may be a circuit, an integrated circuit, a chip or a set of chips. The contact data providing component 26 may be a circuit, an integrated circuit, a chip or a set of chips.

The contact data providing trigger instruction receiving component 27 may be a circuit, an integrated circuit, a chip or a set of chips. The contact data providing trigger transmitting component 28 may be a circuit, an integrated circuit, a chip or a set of chips. The contact data providing trigger generating component 32 may be a circuit, an integrated circuit, a chip or a set of chips.

The foregoing description of the preferred embodiments of the disclosure has been presented for purposes of illustration and description. It is not intended to be exhaustive or to limit the disclosure to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the disclosure and its best mode practical application, thereby to enable people skilled in the art to understand the disclosure for various embodiments and with various modifications as are suited to the particular use or implementation contemplated. Therefore, the term "the disclosure" or the like does not necessarily limit the claim scope to a specific embodiment, and the reference to particularly preferred exemplary embodiments of the disclosure does not imply a limitation on the disclosure, and no such limitation is to be inferred. The disclosure is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow an inquirer to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the disclosure. It should be appreciated that variations may be made in the embodiments described by people skilled in the art without departing from the scope of the disclosure as defined by the following claims. Moreover, no element and component in the present disclosure is intended to be dedicated to the public regardless of whether the element or component is explicitly recited in the following claims.

**Reference signs**

| | | | |
|---|---|---|---|
| 10 | master display | 19b | orientation data receiving component |
| 11 | image data receiving component | | |
| 12 | slave display existence identification component | 20 | slave display |
| | | 21 | image data receiving component |
| 121 | slave display existence request providing sub-component | 22 | slave display existence request receiving component |
| 122 | slave display existence data receiving sub-component | 23 | slave display existence data providing component |
| 13 | master display contact identification component | 24 | contact data providing trigger receiving component |
| 131 | contact data providing trigger | 25 | contact identification component |
| | generating sub-component | 26 | contact data providing component |
| 132 | contact data providing trigger transmitting sub-component | 27 | contact data providing trigger instruction receiving component |
| 14 | slave display contact identification component | 28 | contact data providing trigger transmitting component |
| 141 | contact data providing trigger instruction generating sub-component | 29 | display element |
| | | 30 | control system component |
| 142 | contact data providing trigger instruction transmitting sub-component | 301 | processing sub-component |
| | | 31 | image data providing component |
| | | 32 | contact data providing trigger generating component |
| 143 | contact data providing trigger generating sub-component | | |
| | | 33 | gravitational sensor |
| 15 | contact data receiving component | 40 | large screen display |
| 16 | control system component | 41 | master display control interface |
| 161 | order setting sub-component | S1 | coupling step |
| 162 | first initiating sub-component | S2 | receiving step |
| 163 | second initiating sub-component | S3 | transmitting step |
| 164 | position identification sub-component | S4 | receiving step |
| | | S5 | receiving step |
| 165 | processing sub-component | S6 | setting step |
| 17 | display element | S7 | providing and transmitting step |
| 18 | image data providing component | S8 | receiving step |
| 19a | gravitational sensor | S9 | providing and transmitting step |
| | | S10 | receiving step |

| | | | |
|---|---|---|---|
| S11 | identifying step | | |
| S12 | providing step | | |
| S13 | processing step | | |
| S14a | providing step | | |
| S14b | providing step | | |
| S15a | displaying step | | |
| S15b | receiving step | | |
| S16 | processing step | | |
| S17 | displaying step | | |
| Sub-S1 | sub-step | | |
| Sub-S2 | sub-step | | |
| Sub-S3 | sub-step | | |
| Sub-S4 | sub-step | | |
| Sub-S5 | sub-step | | |
| Sub-S6 | sub-step | | |
| Sub-S7 | sub-step | | |
| Sub-S8 | sub-step | | |
| Sub-S9 | sub-step | | |
| Sub-S10 | sub-step | | |
| Sub-S11 | sub-step | | |
| Sub-S12 | sub-step | | |
| Sub-S13 | sub-step | | |
| Sub-S14 | sub-step | | |
| Sub-S15 | sub-step | | |
| Sub-S16 | sub-step | | |

## Claims

1. A master display (10) of a large screen display (40), comprising:
an image data receiving component (11) configured for receiving image data;
a slave display existence identification component (12) configured for requesting and receiving slave display existence data from at least one slave display(s) (20);
at least one master display contact identification component(s) (13) disposed on at least one edge(s) of the master display (10) configured for providing and transmitting a contact data providing trigger to at least one adjacent slave display(s) (20) of the master display (10) and configured for receiving a contact data providing trigger by at least one slave display(s) (10) being adjacent to the master display (20);
a slave display contact identification component (14) configured for providing a contact data providing trigger instruction and for transmitting the contact data providing trigger instruction to a slave display (20) for instructing the slave display (20) to provide a contact data providing trigger to at least one adjacent slave display(s) (20) of the slave display (20);
a contact data receiving component (15) for receiving contact data from the at least one adjacent slave display(s) (20) of the master display (10) and for receiving contact data from the at least one adjacent slave display(s) (20) of the slave display (20);
a control system component (16) communicatively coupled to the image data receiving component (11), the slave display existence identification component (12), the at least one master display contact identification component(s) (13), the slave display existence identification component (14), and the contact data receiving component (15), wherein the control system component (16) is configured for:
setting an order of the at least one slave display(s) (20) based on received slave display existence data,
initiating a transmitting of the contact data providing trigger to at least one adjacent slave display(s) (20) of the master display (10) and initiating a receiving of the contact data of the at least one adjacent slave display(s) (20) of the master display (10),
initiating subsequently in the set order a transmitting of the contact data providing trigger instruction to a slave display (20) and initiating a receiving of the contact data of the at least one adjacent slave display(s) (20) of the slave display (20),
identifying a position of the master display (10) and the at least one slave display(s) (20) in the large screen display (40) based on the received contact data of the at least one adjacent slave display(s) (20) of the master display (10) and the received contact data of the at least one adjacent slave display(s) (20) of the slave display (20),
processing the image data provided by the image data receiving component (11) based on the position data; and
a display element (17) communicatively coupled to the control system component (16) for displaying an image according to the processed image data.

2. The master display (10) according to claim 1, further comprising an image data providing component (18) communicatively coupled to the control system component (16), wherein the image data providing component (18) is configured for providing the processed image data to the at least one slave display(s) (20) or for providing the received image data with the provided position data to the at least one slave display(s) (20).

3. The master display (10) according to any one of the preceding claims, wherein the slave display existence identification component (12) comprises:
a slave display existence request providing sub-component (121) configured for providing and for transmitting a slave display existence request to at least one slave display (20); and
a slave display existence data receiving sub-component (122) configured for receiving slave display existence data from at least one slave display (20).

4. The master display (10) according to any one of the preceding claims, wherein the at least one master display contact identification component (13) comprises:
a contact data providing trigger generating sub-component (131) configured for generating a contact data providing trigger; and
a contact data providing trigger transmitting sub-component (132) configured for transmitting the provided contact data providing trigger to at least one adjacent slave display(s) (20) of the master display (10).

5. The master display (10) according to any one of the preceding claims, wherein the slave display contact identification component (14) comprises:
a contact data providing trigger instruction generating sub-component (141) configured for generating a contact data providing trigger instruction, and
a contact data providing trigger instruction transmitting sub-component (142) configured for transmitting the contact data providing trigger instruction to a slave display (20), or
a contact data providing trigger instruction generating sub-component (141) configured for generating a contact data providing trigger instruction,
a contact data providing trigger generating sub-component (143) configured for generating a contact data providing trigger; and
a contact data providing trigger instruction transmitting sub-component (142) configured for transmitting the contact data providing trigger instruction and the contact data providing trigger to a slave display (20).

6. The master display (10) according to any one of the preceding claims, wherein the control system component (16) comprises:
an order setting sub-component (161) configured for setting an order of the received slave display existence data;
a first initiating sub-component (162) configured for initiating a transmitting of the contact data providing trigger to at least one adjacent slave display(s) (20) of the master display (10) and configured for initiating a receiving of the contact data of the at least one adjacent slave display(s) (20) of the master display (10),
a second initiating sub-component (163) configured for initiating a transmitting of the contact data providing trigger instruction to a slave display(s) (20) and configured for initiating a receiving of the contact data of the at least one adjacent slave display(s) (20) of the slave display (10),
a position identification sub-component (164) configured for identifying a position of the master display (10) and the at least one slave display(s) (20) in the large screen display (40) based on the received contact data of the at least one adjacent slave display(s) (20) of the master display (10) and the received contact data of the at least one adjacent slave display(s) (20) of the slave display (20) and for providing position data of the master display (10) and the at least one slave display(s) (20); and/or
a processing sub-component (165) configured for processing the received image data provided by the image data receiving component (11) based on the position data.

7. The master display (10) according to any preceding claims, further comprising:
at least one gravitational sensor(s) (19a) communicatively coupled to the control system component (16), the at least one gravitational sensor(s) (19a) is configured for providing orientation data indicating the orientation of the master display (10), and/or
at least one orientation data receiving component(s) (19b) configured for receiving orientation data from at least one slave display(s) (20),
wherein the control system component (16) is further configured for processing the image data provided by the image data receiving component (11) based on the position data and the orientation data of the master display (10) and/or the receiving orientation data from at least one slave display(s) (20).

8. The master display (10) according to any one of the preceding claims, wherein the slave display existence data is the unique ID of each one of the at least one slave display(s) (20).

9. The master display (10) according to any one of the preceding claims, wherein the contact data providing trigger is a mechanical, optical, electronic magnetic, sonic or radio frequency pulse.

10. A slave display (20) of a large screen display (40), comprising:
an image data receiving component (21) for receiving processed image data from the master display (10);
a slave display existence request receiving component (22) configured for receiving a slave display existence request from the master display (10);
a slave display existence data providing component (23) configured for providing slave display existence data and for transmitting the slave display existence data to the master display (10);
at least one contact data providing trigger receiving component(s) (24) disposed on at least one edge(s) of the slave display (20) and configured for receiving the contact data providing trigger transmitted by the master display (10);
at least one contact identification component(s) (25) disposed on at least one edge(s) of the slave display (20) configured for providing contact data of the slave display (20);
a contact data providing component (26) configured for transmitting the contact data of the slave display (20) to the master display (10) when a contact data providing trigger is received;
at least one contact data providing trigger instruction receiving component(s) (27) configured for receiving a contact data providing trigger instruction from the master display (10);
at least one contact data providing trigger transmitting component(s) (28) configured for transmitting a contact data trigger to at least one adjacent display (10, 20) of the slave display (20); and
a display element (29) configured for displaying an image according to the processed image data.

11. A slave display (20) of a large screen display (40), comprising:
an image data receiving component (21) for receiving image data and position data from the master display (10);
a slave display existence request receiving component (22) configured for receiving a slave display existence request from the master display (10);
a slave display existence data providing component (23) configured for providing slave display existence data and for transmitting the slave display existence data to the master display (10);
at least one contact data providing trigger receiving component(s) (24) disposed on at least one edge(s) of the slave display (20) and configured for receiving the contact data providing trigger transmitted by the master display (10);
at least one contact identification component(s) (25) disposed on at least one edge(s) of the slave display (20) configured for providing contact data of the slave display (20);
a contact data providing component (26) configured for transmitting the contact data of the slave display (20) to the master display (10) when a contact data providing trigger is received;
at least one contact data providing trigger instruction receiving component (27) configured for receiving a contact data providing trigger instruction from the master display (10);
at least one contact data providing trigger transmitting component (28) configured for transmitting a contact data trigger to at least one adjacent display (10, 20) of the slave display (20);
a control system component (30) communicatively coupled to the image data receiving component (21), the slave display existence request receiving component (22), the slave display existence data providing component (23), the at least one contact data providing trigger receiving component(s) (24), the at least one contact identification component(s) (25), the contact data providing component (26), the at least one contact data providing trigger instruction receiving component (27), and at least one contact data providing trigger transmitting component (28), wherein the control system component (30) is configured for processing the received image data based on the received position data; and
a display element (29) configured for displaying an image according to the processed image data.

12. The slave display (20) according to claims 10 or 11, further comprising:
an image data providing component (31) communicatively coupled to the control system component (30) of the slave display (20), wherein the image data providing component (31) is configured for providing the image data to at least one slave display(s) (20) or for providing the received image data with the provided position data to at least one slave display(s) (20); and/or
a contact data providing trigger generating component (32) configured for generating a contact data trigger when the contact data providing trigger instruction is received; and/or wherein the control system component (30) comprises a processing sub-component (301) configured for processing the received image data provided by the image data receiving component (21) based on the position data.

13. A large screen display (40) comprising a master display (10) according to any one of the claims 1 to 9; and at least one slave display (20) according to any one of the claims 10 to 12.

14. A method applied to a large screen display (40) comprising:
communicatively coupling (S1) a master display (10) and at least one slave display(s) (20);
receiving (S2) image data by the master display (10);
transmitting (S3) by the master display (10) a slave display existence request to at least one slave display(s) (20);
receiving (S4) a slave display existence request by at least one slave display(s) (20) and transmitting slave display existence data by at least one slave display (20) to the master display (10);
receiving (S5) the slave display existence data by the master display (10);
setting (S6) an order of the received slave display existence data by the master display (10);
providing and transmitting (S7) a contact data providing trigger to at least one adjacent slave display(s) (20) of the master display (10);
receiving (S8) contact data by the master display (10) from the at least one adjacent slave display(s) (20) of the master display (10);
subsequently and in the set order, providing and transmitting (S9) by the master display (10) contact data providing trigger instructions to a slave display (20) for instructing the slave display (20) to provide a contact data providing trigger to at least one adjacent slave display(s) (20) of the slave display (20) and receiving (S10) by the master display (10) contact data from the at least one adjacent slave display(s) (20) of the slave display(s) (20);
identifying (S11) by the master display (10) a position of the master display (10) and the at least one slave display(s) (20) in the large screen display (40) based on the contact data from the at least one adjacent slave display(s) (20) of the master display (10) and the contact data from the at least one adjacent slave display(s) (20) of the slave display(s) (20) and providing (S12) position data based on the contact data;
processing (S13) by the master display (10) image data based on the position data;
providing (S14a) the image data processed by the master display (10) based on the position data to the at least one slave display(s) (20); and
displaying (S15a) by a display element (26) of the at least one slave display(s) (20) an image according to the processed image data and displaying by a display element (17) of the master display (10) an image according to the processed image data.

15. A method applied to a large screen display (40) comprising:
communicatively coupling (S1) a master display (10) and at least one slave display(s) (20);
receiving (S2) image data by the master display (10);
transmitting (S3) by the master display (10) a slave display existence request to at least one slave display(s) (20);
receiving (S4) a slave display existence request by at least one slave display(s) (20) and transmitting (S8) slave display existence data by at least one slave display (20) to the master display (10);
receiving (S5) the slave display existence data by the master display (10);
setting (S6) an order of the received slave display existence data by the master display (10);
providing and transmitting (S7) a contact data providing trigger to at least one adjacent slave display(s) (20) of the master display (10);
receiving (S8) contact data by the master display (10) from the at least one adjacent slave display(s) (20) of the master display (10);
subsequently and in the set order, providing and transmitting (S9) by the master display (10) contact data providing trigger instructions to a slave display (20) for instructing the slave display (20) to provide a contact data providing trigger to at least one adjacent slave display(s) (20) of the slave display (20) and receiving (S10) by the master display (10) contact data from the at least one adjacent slave display(s) (20) of the slave display(s) (20);
identifying (S11) by the master display (10) a position of the master display (10) and the at least one slave display(s) (20) in the large screen display (40) based on the contact data from the at least one adjacent slave display(s) (20) of the master display (10) and the contact data from the at least one adjacent slave display(s) (20) of the slave display(s) (20) and providing (S12) position data based on the contact data;
processing (S13) by the master display (10) image data based on the position data;
providing (S14b) the image data received by the master display (10) and the position data provided by the master display (10) to at least one slave display(s) (20);
receiving (S15b) the image data and the provided position data by at least one slave display(s) (20);
processing (S16) by the at least one slave display(s) (20) the image data provided by the master display (10) based on the received position data; and
displaying (S17) by a display element (29) of the at least one slave display(s) (20) an image according to the processed image data of the control system component (30) of the at least one slave display(s) (20) and displaying by a display element (17) of the master display (10) an image according to the processed image data.
